# EUROPÄISCHE PATENTSCHRIFT

(11) **EP 1 210 385 B1**
(45) Veröffentlichungstag und Bekanntmachung des Hinweises auf die Patenterteilung: **22.03.2006**
(21) Anmeldenummer: 01909640.3
(22) Anmeldetag: 17.01.2001
(51) Int. Cl.: C08J 5/18, C08L 33/00, C08L 33/08, C08L 33/10

(54) **SELBSTVERSTÄRKENDES, THERMOPLASTISCH VERFORMBARES HALBZEUG, INSBESONDERE FÜR DIE HERSTELLUNG VON SANITÄRARTIKELN, VERFAHREN ZUR HERSTELLUNG SOWIE DARAUS HERGESTELLTE FORMKÖRPER**
SELF-REINFORCING THERMOPLASTICALLY-DEFORMABLE SEMI-FINISHED PRODUCT, IN PARTICULAR FOR THE PRODUCTION OF SANITARY ITEMS, METHOD FOR PRODUCTION THEREOF AND MOULDED BODIES MADE THEREFROM
DEMI-PRODUIT THERMOPLASTIQUEMENT DEFORMABLE S'AUTORENFORCANT, DESTINE EN PARTICULIER A LA PRODUCTION D'ARTICLES SANITAIRES, SON PROCEDE DE PRODUCTION ET CORPS MOULES REALISES A PARTIR DE CE DEMI-PRODUIT

(30) Priorität: 03.02.2000 DE 10004452
(43) Veröffentlichungstag der Anmeldung: 05.06.2002
(73) Patentinhaber: Röhm GmbH & Co. KG, 64293 Darmstadt (DE)
(72) Erfinder: SCHÖLA, Egbert, A-7052 Müllendorf (AT); MOLNAR, Gerald, A-2440 Gramatneusiedl (AT); SCHWENNINGER, Robert, A-2232 Deutsch Wagram (AT)
(86) Internationale Anmeldenummer: PCT/EP2001/000489
(87) Internationale Veröffentlichungsnummer: WO 2001/057117

(56) Entgegenhaltungen:
- EP-A- 0 734 828

## Beschreibung

Die vorliegende Erfindung betrifft plattenförmiges Halbzeug aus gefülltem Poly(meth)acrylat, Verfahren zur Herstellung solcher. Poly(meth)acrylatplatten sowie Formkörper, vorzugsweise Sanitärartikel, die aus dem Halbzeug hergestellt werden können.

Insbesondere betrifft die vorliegende Erfindung selbstverstärkendes, thermoplastisch verformbares Halbzeug, bestehend aus einer einschichtigen Platte aus gefülltem Poly(meth)acrylat, wobei das Platten-Halbzeug einen auf sein Gesamtgewicht bezogenen mittleren Füllstoffgehalt Fₘ in Gewichtsprozent, eine Oberseite O und eine Unterseite U aufweist.

Dieses Halbzeug aus Poly(meth)acrylat dient insbesondere zur Herstellung von Sanitärartikeln, wie beispielsweise Badewannen, Duschtassen und Spülbecken, bevorzugt im Hinblick auf Duschtassen und Spülbecken in Hochleistungsverformungsverfahren wie dem Tiefziehverfahren.

Prinzipiell werden Sanitärartikel aus Poly(meth)acrylat ("Acrylglas") durch einen mehrstufigen Herstellungsprozeß gefertigt. Zunächst wird eine Acrylglasplatte hergestellt, die anschließend thermogeformt wird. Wegen der unzureichenden mechanischen Eigenschaften des Formkörpers, muß eine Verstärkung vorgesehen werden. Dies erfolgt beispielsweise durch Aufsprühen und Härten eines polymersierbaren Reaktivharzes. (Styrol/Glasfaserhäcksel-Mischung) auf die Rückseite des Formkörpers. Dabei wird häufig zusätzlich zur Verstärkung des Bodenbereichs eine Holzplatte eingefügt, die ebenfalls durch das Sprühen von Glasfaserharzmaterial fixiert wird.

Nach dem Aufsprühen oder Aufbringen der Verstärkungsmaterialien müßen außerdem nicht plan an der Rückseite des Sanitärartikels anliegende Fasern (Glasfaserhäcksel) von Hand angerollt werdent.

Darüberhinaus ist es unter bestimmten Umständen nach den bereits beschriebenen Arbeitsschritten zusätzlich notwendig, den Sanitärartikel zu tempern, um die Verstärkungsschicht zu polymerisieren und endgültig auszuhärten.

Nachteilig an diesem Verfahren sind die verschiedenen personalintensiven Arbeitsschritte und die störenden Lösungsmittelemissionen bei der Hinterfütterung allgemein sowie das Glasfaserhandling, das auch ein großes Gefahrenpotential per se bedeutet. Schließlich ist die Rezyklierbarkeit der Sanitärartikel aufgrund der Verarbeitung unterschiedlicher Kunststoffkomponeneten sowie des Materialmix von verstärkenden Stoffen und Kunststoffen schlecht.

Einen gewissen Fortschritt bei der Vermeidung der angesprochenen Nachteile erreicht man durch das Verfahren gemäß der WO 98/45375 = PCT/EP98/01881. Die Verstärkungsschicht besteht gemäß dieser Druckschrift aus einem kalt härtenden (Meth)acrylatharz, welches einen Gehalt an 1 bis 75 Gewichtsprozent an Feinfüllstoffen mit einer Partikelgröße von nicht mehr als 100 µm aufweist. Damit gelingt es unter Verzicht auf fasrige Füllstoffe wie Asbest oder Glasfaserhäcksel einen Sanitärartikel bereitzustellen, welcher vollständig rezyklierbar ist und dennoch die geforderten mechanischen Eigenschaften erfüllt. Allerdings ist das Aufbringen der Verstärkungsschicht in einem Sprühverfahren nicht ganz unproblematisch, zumindest unter dem Aspekt der Arbeitssicherheit, vor allem durch die gesundheitliche Gefährdung des Arbeitspersonals.

Die WO 97/46625 = PCT/GB97/01523 (ICI) schlägt vor, die Gefährdung des Arbeits- und Bedienpersonals dadurch zu verringern, daß zur Härtung des aufzusprühenden (Meth)acrylatsystems wässrige Redoxsysteme eingesetzt werden. Hierdurch wird zwar die Beeinträchtigung durch Lösemittel (Ethylmethylketon, andere Ketone, organische Lösungsmittel und dergleichen) beim Sprühvorgang reduziert, allerdings ist das Sprühauftragen selbst ein nicht ganz von Gefahren freier Arbeitsvorgang. So ist beispielsweise die beim Versprühen unvermeidbare feinste Verteilung von vergleichsweise flüchtigen polymerisierbaren Bestandteilen des (Meth)acrylatharzes anzuführen. Die ansich relativ niedrigen MAK-Werten für MMA und andere Monomere werden beim Sprühauftragen sehr viel schneller erreicht als etwa bei anderen Verarbeitungsmethoden. Es wäre insbesonders wünschenswert, auf das nachträgliche Aufsprühen oder Auftragen einer Verstärkungsschicht verzichten zu können.

Angesichts des hierin genannten und diskutierten. Standes der Technik war es eine Aufgabe der Erfindung, Halbzeug aus Poly(meth)acrylat bereitzustellen, aus dem die zuvor näher bezeichneten Sanitärartikel mit einem möglichst geringen Fertigungsaufwand hergestellt werden können.

Zugleich ist die Schaffung vollständig rezyklierbarer verstärkter Platten aus Poly(meth)acrylat ("Acrylglasplatten") die Aufgabe der Erfindung gewesen.

Eine weitere Aufgabe ist darin zu sehen, daß das Verfahren zur Herstellung des Halbzeugs sowie der Sanitärartikel mit möglichst geringen Emissionen (Lösemittel, flüchtige und gefährliche Stoffe, wie Monomere und ähnliche) verbunden sein sollte.

Des weiteren sollte das Halbzeug mit den zur Zeit technisch üblichen Produktionsverfahren hergestellt und verarbeitet werden können.

Noch eine Aufgabe der Erfindung ist die Bereitstellung vollständig rezyklierbarer Formkörper, wie vorzugsweise Duschtassen oder Waschbecken, die insbesondere unter , Einsatz der an sich für Acrylglas bekannten Depolymerisationstechnik mittels Metallbädern, vollständig und möglichst ohne Gefährdung des Bedienpersonals rezyklierbar sind.

Eine weitere Aufgabe der Erfindung ist darin zu sehen, plattenförmiges Halbzeug zur Verfügung zu stellen, aus dem Sanitärartikel, wie vorzugsweise Duschtassen oder Waschbecken, hergestellt werden können, die bei möglichst hoher Materialersparnis den allgemeinen Anforderungen genügen, wie sie im Hinblick auf die Stabilität an eben solche Sanitärartikel gestellt werden.

Auch soll die Bildung von Rissen im Sanitärartikel, die gerade bei Hochleistungsverformungen von Poly(meth)acrylatplatten (Halbzeug) eine besondere Gefahr darstellt, möglichst zurückgedrängt werden.

Noch eine weitere Aufgabe ist in der Bereitstellung eines möglichst schlagfesten Halbzeugs in Form einer Poly(meth)acrylatplatte zu sehen.

Außerdem sollen sowohl das neue Halbzeug als auch der hieraus herstellbare neue Sanitärartikel möglichst einfach zu fertigen sein.

Weiters soll das Nachbearbeiten per Hand auf ein Mindestmaß reduziert werden.

Schließlich spielt auch eine möglichst hohe und einfache Automatisierbarkeit des Verfahrens zur Herstellung der Formkörper aus verstärkten Poly(meth)acrylatplatten eine nicht unwesentliche Rolle.

Von besonderem Interesse ist auch die Schaffung eines Sanitärartikels aus verstärkten Poly(meth)acrylatplatten, welcher hohe und/oder verbesserte Werte hinsichtlich eines, mehrerer oder aller der mechanischen Parameter wie Abreißfestigkeit, Biegefestigkeit (gemessen auf der Innenseite (Oberseite) des Acrylglasformteils), Biegefestigkeit (rückseitig (unterseitig) gemessen), E-Modul, Schlagzähigkeit (gemessen auf der Seite des Acrylglasformteils, innenseitig oder oberseitig), Schlagzähigkeit (rückseitig (entspricht "beschichtungsseitig" beim Stand der Technik) gemessen) aufweist.

Gelöst werden diese Aufgaben sowie weitere Aufgaben, die zwar nicht im einzelnen wörtlich genannt wurden, die sich jedoch aus der einleitenden Diskussion des Standes der Technik ohne weiteres erschließen oder wie selbstverständlich ableiten lassen, durch ein Halbzeug mit allen Merkmalen des Anspruches 1.

Vorteilhafte Ausgestaltungen des erfindungsgemäßen Halbzeugs sind Gegenstand der auf den unabhängigen Produktanspruch rückbezogenen Ansprüche.

In verfahrensmäßiger Hinsicht geben die Merkmale des unabhängigen Verfahrensanspruchs eine Lösung des der Erfindung im Hinblick auf die Verfahrensaspekte zugrundeliegenden Problems an. Vorteilhafte Verfahrensvarianten werden in den vom unabhängigen Verfahrensanspruch abhängigen Verfahrensansprüchen unter Schutz gestellt.

Hinsichtlich des Formkörpers, vorzugsweise Sanitärartikels, liefert der entsprechende Anspruch aus dem Anspruchssatz die Lösung des zugrundeliegenden Problems, wobei vorteilhafte Ausgestaltungen Gegenstand der auf diesen Produktanspruch rückbezogenen Ansprüche ist.

Dadurch, daß ein selbstverstärkendes, thermoplastisch verformbares Halbzeug, insbesondere für die Herstellung von Sanitärartikeln, bevorzugt im Tiefziehverfahren, bestehend aus einer einschichtigen Platte aus gefülltem Poly(meth)acrylat, wobei das Platten-Halbzeug einen auf sein Gesamtgewicht bezogenen mittleren Füllstoffgehalt Fₘ in Gewichtsprozent, eine Oberseite O und eine Unterseite U aufweist, sich dadurch auszeichnet, daß das Platten-Halbzeug an der Oberseite O an Füllstoffen abgereichert und an der Unterseite U an Füllstoffen angereichert ist, jeweils bezogen auf Fₘ, gelingt es ein Halbzeug zur Verfügung zu stellen, aus dem, beispielsweise durch einfache Warmformverfahren, Sanitärartikel hergestellt werden können, die alle von den Norminstituten und den industriellen Verarbeitern bezüglich der physikalischen Eigenschaften des Sanitärartikels aufgestellten Forderungen in herausragender Weise erfüllen und die zugleich eine stark vereinfachte Fertigung von Sanitärartikeln gestatten. Außerdem gelingt es, eine große Zahl weiterer zusätzlicher Vorteile zu erlangen.

Hierzu gehören unter anderem:
● Das erfindungsgemäße Halbzeug ist "selbstverstärkend", wodurch erstmals ein Halbzeug in Sanitärqualität bereitgestellt wird, aus dem lediglich durch thermische Formgebung ein tauglicher Sanitärartikel, vorzugsweise Duschwanne oder Waschbecken, herstellbar ist.
● Es entfällt die Hinterfütterung bei der Fertigung, d.h. das Auftragen einer Verstärkungsschicht nach der Formgebung des Sanitärartikels.
● Es wird eine weitergehende Automatisierung des Herstellungsverfahrens erreicht, das Auftragen der Verstärkung per Hand entfällt ebenso wie das händische Nachbearbeiten der geformten und verstärkten Sanitärartikel.
● Vollständige Rezyklierbarkeit des Halbzeugs sowie des hieraus herstellbaren Sanitärartikels auf dem Weg der an sich bekannten Depolymerisation von Acrylglas unter anderem durch Vermeidung von Polyestern (Polyesterharzfreiheit).
● Mechanische Eigenschaften (nämlich Verformbarkeit, Schlagzähigkeit und Steifigkeit) gemäß DIN EN 249 (Duschwannenspezifikation) und mechanische Eigenschaften (nämlich Verformbarkeit und Schlagzähigkeit) gemäß DIN EN 198 (Badewannenspezifikation) werden in hervorragender Weise eingehalten und über die verlangten Maße hinaus erfüllt.
● Mechanische Eigenschaften (Schlagfestigkeit) gemäß DIN ISO 179 werden in hervorragender Weise eingehalten und über die verlangten Maße hinaus erfüllt.
● Mechanische Eigenschaften (Biegefestigkeit) gemäß DIN ISO 178 werden in hervorragender Weise eingehalten und über die verlangten Maße hinaus erfüllt.
● Es können bei der Herstellung des Halbzeugs (der Poly(meth)acrylatplatte) und des Sanitärartikels kommerziell erhältliche Maschinen und Anlagen verwendet werden, so daß auf den Einsatz von teuerem Spezialwerkzeug weitestgehend verzichtet werden kann.
● Durch die vorzugsweise Lösungsmittelfreiheit bei der Herstellung des Sanitärartikels aus der Poly(meth)acrylatplatte wird die Gefahr des Auftretens von Spannungsrissen minimiert. Lösungsmittelhaltige Systeme, wie sie bei der Hinterfütterung von Acrylglasformteilen eingesetzt werden können, neigen insbesondere beim Temperaturwechseltest nach DIN EN 249 zu Spannungsrissen in der fertigen Verstärkungsschicht.

Im Zusammenhang mit der Erfindung wird unter einem "selbstverstärkenden, thermoplastisch verformbaren Halbzeug" eine einschichtige Platte aus gefülltem Poly (meth) acrylat in Sanitärqualität verstanden, die nach Thermoformung zu einem Sanitärartikel auf ein maximales Dickenverhältnis von Ausgangsdicke:Enddicke (vor Thermoformung bzw. nach Thermoformung) wie 1:0,2, vorzugsweise 1:0,25, besonders bevorzugt 1:0,33, ganz besonders bevorzugt 1:0,5, den für Sanitärartikeln in den einschlägigen Normen (DIN EN 249, DIN ISO 178, DIN ISO 179) angegebenen mechanischen Anforderungen genügt, und zwar ohne daß zusätzliche Verstärkungen nötig wären.

Der Terminus "zusätzliche Verstärkung" bezieht sich hierbei auf die Verbesserung von mechanischen Eigenschaften einer einschichtigen Platte durch eine zusätzliche Schicht. Die zusätzliche Schicht kann mit der Platte laminiert sein, sei es mit oder ohne Haftvermittler oder aber sie kann beispielsweise auch in Form einer verstärkend wirkenden Hinterfütterung vorgesehen sein. Dabei kann die Verstärkungswirkung beispielsweise durch den E-Modul gemäß DIN 53 457 bestimmt werden. Hierbei ist jede Zunahme des E-Moduls der verstärkten Platte im Vergleich zur Platte ohne zusätzliche Schicht als Verstärkung aufzufassen.

"Selbstverstärkend" nimmt damit die Bedeutung von Verbesserung der mechanischen Eigenschaften der einschichtigen Platte (des Halbzeugs) ohne zusätzliche Verstärkungsschicht an, wobei die Platte essentiell aus einer einzigen Schicht aus gefülltem Poly(meth)acrylat besteht.

"Gefülltes Poly(meth)acrylat" meint ein Poly(meth)acrylat welches Füllstoffe aufweist.

"Halbzeug" meint für die Zwecke der Erfindung ein zur weiteren Verarbeitung bestimmtes plattenförmiges Vorprodukt aus gefülltem Poly(meth)acrylat. Aus den plattenförmigen Vorprodukten werden durch nachgeschaltete Fertigungsverfahren (bevorzugt thermische Umformung, besonders bevorzugt Hochleistungsverformungen wie etwa das Tiefziehen) Fertigerzeugnisse (Sanitärartikel) beliebiger Form u. Abmessungen hergestellt.

Unter dem Begriff "Platten" sollen flächige Gebilde beliebiger Geometrie verstanden werden, die beispielsweise rund, eckig, halbrund oder auf sonstige Weise geformt sein können. Bevorzugt sind die Platten quadratisch oder rechtedkig.

Die "Oberseite O" des erfindungsgemäßen-Platten-Halbzeugs bezeichnet die Oberfläche der Innenseite des aus dem Halbzeug durch Formung erhältlichen Sanitärartikels. Die Innenseite des Sanitärartikels ist diejenige Seite, die bei ordnungsgemäßem Gebrauch regelmäßig mit Wasser in Berührung kommt, also bei Wannen, Tassen oder Becken die Innenseite.

Die Unterseite U" des erfindungsgemäßen Platten-Halbzeugs bezeichnet die Oberfläche der Außenseite des aus dem Halbzeug durch Formung erhältlichen Sanitärartikels. Die Außenseite des Sanitärartikels ist diejenige Seite, die bei bestimmungsgemäßem Gebrauch regelmäßig nicht mit Wasser in Berührung kommt.

Der "mittlere Füllstoffgehalt Fₘ" des Platten-Halbzeugs ergibt sich aus dem Verhältnis des Gewichts der im Platten-Halbzeug enthaltenen Füllstoffe zum Gesamtgewicht des Platten-Halbzeugs multipliziert mit dem Faktor 100. Der Füllstoffgehalt Fₘ liegt zweckmäßig im Bereich zwischen 20 und 80 Gewichtsprozent, bevorzugt zwischen 30 und 70 Gewichtsprozent, besonders zweckmäßig zwischen 40 und 60 Gewichtsprozent. Die Menge, des im Halbzeug der Erfindung enthaltenen Füllstoffs kann die mechanischen Eigenschaften maßgeblich steuern.

Gemäß der Erfindung ist das Platten-Halbzeug an der Oberseite O an Füllstoffen abgereichert und an der Unterseite U an Füllstoffen angereichert, jeweils bezogen auf Fₘ. Abgereichert meint, daß der lokale Gehalt an Füllstoffen im Bereich der Oberseite geringer als Fₘ ist, während angereichert bedeutet, daß der lokale Gehalt an Füllstoffen im Bereich der Unterseite größer als Fₘ ist.

"Lokaler Gehalt an Füllstoffen" bedeutet die Füllstoffkonzentration in einem Einheitsvolumenelement bestimmt in [kg·m⁻³]. Durch die Abreicherung an Füllstoffen im Bereich der Oberseite des Halbzeugs gelingt es besonders zweckmäßig eine hochglänzende Oberfläche bereitzustellen, während die Anreicherung der Füllstoffe im Bereich der Unterseite des Halbzeugs besonders günstig für die Verstärkungswirkung ist.

Von besonderem Interesse für die Erfindung sind Halbzeuge die sich durch eine Dicke d kennzeichnen, die sich im Querschnitt gesehen, bezogen auf das Halbzeug, von der Oberseite O in Richtung auf die Unterseite U erstreckt, so daß d bei O den Wert null und d bei U den Wert 1•d hat, wobei ein mittlerer Füllstoffgehalt Fₒ in Gewichtsprozent, bezogen auf den Abschnitt des Platten-Halbzeugs zwischen 0 und 0,1•d, kleiner als Fₘ ist, während ein mittlerer Füllstoffgehalt Fᵤ in Gewichtsprozent, bezogen auf den Abschnitt des Platten-Halbzeugs zwischen 0,9.d und 1·d, größer als Fₘ ist. F₀ wird analog zu Fₘ ermittelt, allerdings für eine der Oberseite nahe Schicht mit definierter Dicke. Analog wird F_{U} für eine der Unterseite des Halbzeugs nahe Schicht mit definierter Dicke bestimmt.

Die Verteilung des Füllstoffs im Halbzeug kann "schichtweise" oder ähnlich oder gleich einem Gradienten sein. Sofern im Hinblick auf die Verteilung des Füllstoffs von einem Gradienten oder einer gradientenartigen Verteilung des Füllstoffs die Rede sein kann, ist der Gradient des Füllstoffs zweckmäßig nicht kontinuierlich, sondern diskoritinuierlich.

In einer besonderen Variante kennzeichnet sich das erfindungsgemäße Halbzeug mithin durch einen von O nach U verlaufenden diskontiniuerlichen Gradienten der Füllstoffkonzentration (unstetige Änderung mit zunehmender Dicke der Platte). Hierdurch können zum Beispiel bestimmte besonders belastete Problembereiche von Sanitärartikeln verstärkt werden.

Ein Halbzeug mit einem solchen diskoninuierlichen Füllstoffgradienten läßt sich beispielsweise durch bestimmte Herstellverfahren erzeugen. Wenn man das Halbzeug durch relativ langsame Polymerisation eines vergleichsweise niedrig-viskosen Polymersirups herstellt, können die verstärkenden Füllstoffe unter dem Einfluß der Schwerkraft sedimentieren.

Wie bereits ausgeführt kann die Abreicherung der Füllstoffe im Bereich der Oberseite unter anderem zu einer Hochglanzoberfläche bei den resultierenden Sanitärartikeln führen. Besonders günstig ist es hierfür, wenn das Halbzeug über eine definierte Tiefe, bestimmt von der Oberseite her, frei von Füllstoffen ist. Gemäß einer besonderen Variante der Erfindung ist die Konzentration der Füllstoffe an der Oberfläche 0 im Bereich zwischen 0 und 0,01**•**d, vorzugsweise zwischen 0 und 0,05•d, besonders bevorzugt zwischen 0 und 0,1•d gleich null.

Art, Form und Menge der im plattenförmigen Halbzeug enthaltenen Füllstoffe können je nach anzustrebendem speziellen Einsatzzweck über einen weiten Bereich variiert werden. Zu den vorteilhaft bei der Herstellung des selbstverstärkenden Halbzeugs einsetzbaren Füllstoffen gehören unter anderem Talk, Dolomit, natürliche Verwachsungen von Talk und Dolomit, Glimmer, Quarz, Chlorit, Aluminiumoxid, Aluminiumhydroxid, Tone, Siliciumdioxid, Silikate, Carbonate, Phosphate, Sulfate, Sulfide, Oxide, Metalloxide, Glasmehl, Glaskugeln, Keramik; Kaolin, Porzellan, Cristobalit, Feldspalt, Kreide, Kohlenstoff und/oder mit inertem Gas gefüllte hohle Mikropartikel. ,

Grundsätzlich sind auch silanisierte Typen von Füllstoffen bevorzugt, da durch die Silanisierung eine bessere Matrixhaftung erreichbar ist, verglichen mit Füllstoffen, die nicht silanisiert sind.

Besonderes Interesse unter den Füllstoffsorten genießen Mineralien die Glimmer (mica), Chlorit (chlorite), Quarz (quartz) aufweisen, wie etwa ®Plastorit-Typen der Firma Naintsch, Verwachsungen von Talk mit Dolomit, insbesondere Verwachsungen von weißem Talk mit reinem Dolomit, BC-Microtypen der Firma Naintsch, ®DORSILIT-Kristallquarzmehl der Firma Dorfner, ®SIL-CELL mikrozellulare Additivkombinationen der Firma Stauss, St. Pölten, ™Scotchlite Mikro-Glashohlkugeln der Firma 3M, ™Dualite Polymer-Mikrohohlkugeln der Firma Pierce & Stevens Corp., ®Extendospheres XOL Hollow Microsptieres der Firma The PQ Corporation und ®Apyral-Typen (Aluminiumhydroxide) der Firma Nabaltec.

Im Bezug auf Mikropartikel eine ganze Reihe von solchen Mikropartikeln einsetzbar. Grundsätzlich handelt es sich um hohle Partikel, die regelmäßig oder unregelmäßig sein können, die jedoch bevorzugt kugelförmig oder sphärisch sind und in ihrem Hohlraum inertes Gas aufweisen.

Zu den verwendbaren Mikrohohlkugeln zählen grundsätzlich Mikrohohlkugeln aus unterschiedlichen Materialien, wie z.B. Glas, Metallen, Metalloxiden, Polymeren und organischen Verbindungen.

Bevorzugt werden für die Erfindung Mikrohohlkugeln aus Kunststoff eingesetzt, die aus Polymeren bestehen, wie z.B. Polystyrol, Polyvinylchlorid, Polyvinylidenchlorid, Polyvinylacetat, Polyacrylat'; Polyacrylnitril, Polybutadien, Polyethylenterephthalat; desweiteren bevorzugt sind auch Mikrohohlkugeln aus Copolymeren oder Terpolymeren, welche auf solchen Monomeren basieren, die die genannten Copolymeren ausbilden.

Beispiele' für solche Polymere und Copoymere, welche die Hohlkugeln selbst bilden, sind unter anderem Vinylidenchlorid-Acrylnitrilcopolymer, Polyvinylidenchlorid, Acrylnitrilvinylidenchloridcopolymer, Acrylnitrilmethacrylonitrilcopolymer, Acrylnitrildivinylbenzol-vinylidenchloridcopolymer u. dgl.

Im Rahmen der Erfindung lassen sich bevorzugt auch Mischungen von Mikrohohlkugeln einsetzen.

Die gemäß der Erfindung einsetzbaren Mikrohohlkugeln oder Mikropartikel können zur Anpassung der Verarbeitungseigenschaften oder zur Variation der Verstärkungseigenschaften mit Überzügen beschichtet sein.

Besonders geeignet sind auch Abwandlungen von den einfachen Mikrohohlkugeln. Beispielsweise sind solche Mikrohohlkugeln von besonderem Interesse, die aus Polymeren bestehen, welche mit mineralischen Stoffen überzogen (beschichtet) sind, um eine bessere Stabilität gegen den Einfluß des umgebenden Mediums zu gewährleisten.

Die Beschichtung der Mikrohohlkugeln kann aus feinstkörnigen Mineralstoffen wie z.B. Calciumcarbonat, Quarz, Glimmer, Aluminiumhydroxid, Cristobalit und dergleichen bestehen.

Besonders bevorzugt sind Mikrohohlkugeln, insbesondere solche aus Kunststoff, die mit Calciumcarbonat beschichtet sind.

Eine Übersicht zur Herstellung der Mikrohohlkugeln findet sich beispielsweise in Mat. Res. Soc. Symp. Proc. Vol. 372, 1995 Materials Research Society bei David L. Wilcox, Sr. und Morris Berg, Seiten 3 bis 13, und der darin zitierten Literatur.

Zu besonders geeigneten Typen von gasgefüllten Mikrohohlkugeln aus Kunststoff gehören unter anderem ®Dualite-Typen, z.B. ®Dualite M 6032, (Pierce & Stevens Corp.); ®Expancel-Typen, z.B. ®Expancel 642 WU, ®Ropaque-Typen, z.B. ®Ropaque OP 62 (Rohm and Haas Co.), Matsumoto Microsphere, z.B. Microsphere F-30E (Matsumoto Yushi Seiyaku Co. Ltd.) und dergleichen.

Die genannten Füllstoffsorten können unterschiedliche Morphologien aufweisen. Sie können sphärisch oder asphärisch sein, wobei faser- oder splitterförmige Füllstoffe weniger bevorzugt sind. Vorteilhafte selbstverstärkende Halbzeuge mit besonders guten Eigenschaftskombinationen werden dann erhalten, wenn die enthaltenen verstärkenden Füllstoffe eine plättchenartige oder nadelartige Form aufweisen. Kugelförmige und insbesonders plättchenförmige oder nadelartige Füllstoffe ermöglichen bei der Formung des Halbzeugs zu Sanitärartikeln, beispielsweise durch Hochleistungsverformungsverfahren wie Tiefziehen des Halbzeugs, eine Ausrichtung der Partikel längs der Flußrichtung des unter Einfluß von Temperatur und/oder Druck fließenden Kunststoffmaterials. Diese Orientierung der verstärkenden Füllstoffpartikel, bevorzugt parallel zur Oberfläche des plattenförmigen Halbzeugs, kann für ein ausgewogenes Steifigkeits- Schlagzähigkeitsverhältnis beim durch Formung resultierenden Sanitärartikel sorgen, ermöglicht eine gute Oberflächenqualität des Sanitärartikels, sorgt für eine ausreichende Fließnahtfestigkeit, kann die Wärmeformbeständigkeit verbessern und übt im allgemeinen einen positiven Einfluß auf die Haptik der fertigen Sanitärartikel aus.

Eine besondere Ausführungsform des erfindungsgemäß resultierenden Halbzeugs liegt dann vor, wenn die eingesetzten Füllstoffpartikel Schichtfüllstoffe sind. Hierunter werden im Sinne der Erfindung solche Füllstoffe verstanden, die eine Vorzugs-Orientierung beim Fließvorgang (Formung des thermoplastisch formbaren Halbzeugs) einnehmen können.

Auch die Größe der Füllstoffpartikel kann eine Rolle für die Qualität des erfindungsgemäßen Halbzeugs spielen. So kann durch eine geeignete Größe der Füllstoffe die Steifigkeit des Halbzeugs und damit des resultierenden Sanitärartikels gesteuert werden. Die verstärkenden Füllstoffe werden allgemein im Korngrößenbereich von etwa 0,01 bis etwa 100 µm eingesetzt. Zweckmäßig ist die mittlere Partikelgröße des eingesetzten Füllstoffs im Bereich von 0,01 bis 80 µm, insbesondere im Bereich von 0,05 bis 30 µm, ganz besonders zweckmäßig im Bereich von 0,1 bis 20 µm.

Je feiner die eingesetzten verstärkenden Füllstoffe sind um so höher sind Steifigkeit und Schlagfestigkeit des Sanitärartikels. Bei größeren Füllstoffen werden die resultierenden Halbzeuge spröder. Besonders vorteilhafte Halbzeuge sind gemäß der Erfindung dadurch gekennzeichnet, daß der Rückstand der eingesetzten Füllstoffe bei einer 20 µm Siebung weniger als zwei Gewichtsprozent ist.

Die Dicke der Halbzeug-Platten ist variabel. So gehören sowohl dickere als auch dünnere selbstverstärkende Halbzeuge zur Erfindung. Aufgrund der damit verbundenen Materialersparnis wird im allgemeinen eine möglichst geringe Dicke angestrebt. Bevorzugt liegt die Dicke d des Halbzeugs im Bereich von 1,5 bis 12 mm, vorzugsweise 2 bis 10 mm, besonders bevorzugt 4 bis 8 mm, noch mehr bevorzugt 4,5 bis 7 mm.

Die erfindungsgemäßen Halbzeuge sind beispielsweise durch Polymerisation eines (Meth)acrylat-Systems in einem Gießverfahren, vorzugsweise nach dem Kammerverfahren oder nach einer seiner Abarten, erhältlich,
wobei das polymerisierbare System:
A)

| | | |
|---|---|---|
| a) (Meth)acrylat | 50 - 100 | Gew.-% |
| a1) Methyl(meth)acrylat | 0 - 99,99 | Gew.-% |
| a2) C₂-C₄ (Meth)acrylat | 0 - 99,99 | Gew.-% |
| a3) ≥ C₅ (Meth)acrylat | 0 - 50 | Gew.-% |
| a4) mehrwertige (Meth)acrylate | 0,01 - 50 | Gew.-% |
| b) Comonomere | 0 - 50 | Gew.-% |
| b1) Vinylaromaten | 0 - 50 | Gew.-% |
| b2) Vinylester | 0 - 50 | Gew.-%, |

wobei die Komponenten a) und b) so gewählt sind, daß sie zusammen 100 Gewichtsprozent der polymerisierbaren Komponente A) ergeben,
B) auf 1 Gew.-Teil A) 0 - 12 Gew.-Teile eines in A) löslichen oder quellbaren (Pre)polymers,
C) Initiator in einer Menge ausreichend zur Härtung der polymerisierbaren Komponente A),
D) gegebenenfalls Mittel zur Einstellung der Viskosität des Systems,
E) übliche Additive in einer Menge bis zu 3 Gew.-teile auf 1 Gewichtsteil A)
und
F) 0,25 bis 4 Gew.-Teile Füllstoffe auf 1 Gew.-Teil Bindemittel (Summe aus A) bis E)) enthält.

Zur Erzielung einer Abreicherung der verstärkenden Füllstoffe an der Oberfläche O sowie einer Anreicherung der verstärkenden Füllstoffe an der Unterseite U der Platte , kann man beispielsweise die Viskosität des zum Erhalt des Halbzeugs zu polymerisierenden (Meth)acrylat-Systems ausnutzen. Vorzugsweise ist das erfindungsgemäße Halbzeug durch Polymerisation eines (Meth)acrylat-Systems erhältlich, welches vor der Polymerisation eine Viskosität im Bereich von 0,02 bis 0,1 Pa•s (20 bis 100 cP), vorzugsweise 0,03 bis 0,08 Pa•s (30 bis 80 cP), besonders bevorzugt 0,04 bis 0,06 Pa•s (40 bis 60 cP), ganz besonders zweckmäßig etwa 0,05 Pa•s (50 cP), aufweist. Bei Polymerisation der Platte im bevorzugten Viskositätsbereich gelingt es besonders gut, eine hochglänzende Oberfläche zu erzielen. Gleichzeitig kann dennoch eine Gleichverteilung von Pigmenten oder weiteren üblichen Füllstoffen erreicht werden, die sehr viel feiner sind als die verstärkenden Füllstoffe. So gelingt gemäß der Erfindung die Kombination von Farbe und hochglänzender Oberfläche mit einem ausreichenden Selbstverstärkungseffekt beim erfindungsgemäßen Sanitärartikel.

Zur Erfindung gehört mithin auch ein Verfahren zur Herstellung eines plattenförmigen Halbzeugs, bei welchem man
a) eine polymerisierbare, gefüllte (Meth)acrylat-Zusammensetzung bereitstellt,
b) die bereitgestellte Zusammensetzung in eine vorbereitete Form gießt,
c) die Zusammensetzung in der Form bei einer Temperatur oberhalb Raumtemperatur unter Erhalt eines plattenartigen Halbzeugs polymerisiert und
d) das Halbzeug entformt,
wobei das Verfahren dadurch gekennzeichnet ist,
daß man die Viskosität der polymerisierbaren, hochgefüllten '(Meth)acrylat-Zusammensetzung vor der Polymeisation in der Form auf einen Wert im Bereich von 0,02 bis 0,1 Pa•s (20 bis 100 cP), vorzugsweise 0,03 bis 0,08 Pa•s (30 bis 80 cP), besonders bevorzugt 0,04 bis 0,06 Pa•s (40 bis 60 cP), ganz besonders zweckmäßig etwa 0,05 Pa•s (etwa 50 cP), einstellt.

Eine erste zweckmäßige Verfahrenvariante der Erfindung kennzeichnet sich dadurch, daß man die Viskosität der polymerisierbaren Zusammensetzung durch Variation des Gewichtsverhältnisses von (Pre)polymer zu polymerisierbaren Monomeren in der Zusammensetzung reguliert.

Alternativ hierzu oder in Kombination damit kann es auch von Vorteil sein, daß man die Viskosität der Zusammensetzung durch Variation des Anteils an viskositätseinstellenden Mitteln reguliert. Solche die Viskosität einstellenden, d.h. regulierenden Mittel sind dem Fachmann an sich bekannt. Hierzu gehören beispielsweise ionische, nichtionische und zwitterionische Emulgatoren.

Besonders bevorzugte Abwandlungen des Verfahrens gemäß der Erfindung beinhalten, daß man als viskositätseinstellendes Mittel einen Emulgator, vorzugsweise ein oder mehrere Lecithine, einsetzt.

Weitere zweckmäßige Mittel oder Verfahren zur Beeinflußung und/oder Einstellung der Viskosität der polymerisierbaren Zusammensetzung umfaßen unter anderem folgende Maßnahmen: Die Viskosität des Polymerisationssystems kann durch Reglerzusatz varrüert werden.

Es kann vorteilhaft sein, die Viskosität des Polymerisationssystems über das Mischungsverhältnis zwischen (Pre)polymer (Vorpolymerisat) und monomeren, polymerisierbaren Bestandteilen des Polymerisationssystems zu steuern.

Art und Menge von Netzmittelzusätzen, wie das angesprochene Lecithin oder auch ®Catafor und dergleichen, können die Einstellung der Viskosität auf den gewünschten Wert ermöglichen.

Die Füllstoffkonzentration als solche beeinflußt die Viskosität des Polymerisationssystems, ebenso wie die Art des Füllstoffs oder der Füllstoffmischung (Korngröße, Ölzahl, Oberflächenbehandlung).

Desweiteren können übliche Zusätze wie zum Beispiel Thixotropierungsmittel (beispielsweise ®Aerosile) die Viskosität des Polymerisationssystems verändern.

Desweiteren kann über die Polymerisationstemperatur Einfluß auf die Viskosität des Systems genommen werden.

Schließlich können auch die Initiatorkonzentration und die Kinetik der Polymerisationsreaktion einen Einfluß auf die Viskosität des Polymerisationssystems und damit den Sedimentationsgrad der Füllstoffe ausüben.

Die erfindungsgemäßen Halbzeuge lassen sich mit an sich bekannten thermoplastischen Formgebungsverfahren formen. Zur Erfindung gehören mithin auch Formkörper aus einer hierin beschriebenen Halbzeug-Platte.

In besonderer Ausgestaltung ist der erfindungsgemäße Formkörper dadurch gekennzeichnet, daß der Formkörper ein Sanitärartikel ist, hergestellt durch thermoplastisches Umformen einer Halbzeug-Platte.

Als Sanitärartikel gelten im Sinne der Erfindung unter anderem Becken, bestimmte Formen von Wannen, Tassen und ähnliche Formen, die auch unregelmäßig sein können. Besonders bevorzugt sind Duschtassen und Waschbecken. Eine besondere Ausführungsform der Erfindung umfaßt Formkörper, die sich dadurch auszeichnen, daß der Formkörper eine Duschtasse ist, hergestellt durch Tiefziehen einer Halbzeug-Platte.

Bei den erfindungsgemäßen Halbzeugen handelt es sich wie bereits mehrfach geschildert um Poly(meth)acrylat-Halbzeuge. Diese zeichnen sich durch einen hohen, vorzugsweise überwiegenden, also relativ hohen Gehalt von 50 Gewichtsprozent oder mehr, an Poly(meth)acrylaten aus. Poly(meth)acrylate sind Polymere von denen angenommen wird, daß sie Struktureinheiten der Formel (I) aufweisen 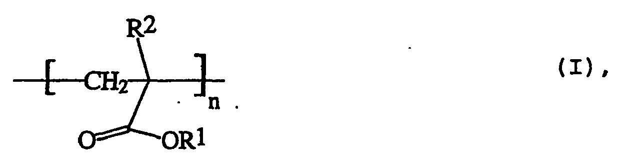 worin
R¹ ein organischer Rest, vorzugsweise C₁₋₆-Alkyl, bevorzugt C₁₋₄-Alkyl,
R² H, C₁₋₆-Alkyl, bevorzugt H oder C₁₋₄-Alkyl, ganz besonders bevorzugt H oder CH₃, und
n eine positive ganze Zahl größer 1
sind.

C₁₋₄-Alkyl umfaßt lineare und verzweigte Alkylreste mit eins bis vier Kohlenstoffatomen. Insbesondere von Interesse sind Methyl, Ethyl, n-Propyl, iso-Propyl, n-Butyl, 2-Methyl-1-propyl, sek.-Butyl, 2-Methyl-2-propyl.

C₁₋₆-Alkyl umfaßt die bei C₁₋₄-Alkyl genannten Reste und zusätzlich Reste mit 5 oder 6 Kohlenstoffatomen, wie vorzugsweise 1-Pentyl, 2-Pentyl, 3-Pentyl, 2,2-Dimethyl-1-propyl, 3-Methyl-1-butyl, 3-Methyl-2-butyl, 2-Methyl-2-butyl, 2-Methyl-1-butyl, 1-Hexyl.

Zu beispielhaften Verbindungen, welche die vorgenannte Struktureinheit aufweisen, gehören neben anderen Polymethylacrylat, Polyethylacrylat, Polymethylmethacrylat, Polypropylacrylat, Polybutylacrylat, Polypropylmethacrylat, Polybutylmethacrylat und Copolymere, die zwei oder mehrere dieser Polymersorten aufweisen. Die ersten vier Verbindungen sind im Rahmen der Erfindung bevorzugt. Ganz besonders bevorzugt ist Polymethylmethacrylat (PMMA).

Neben den chemischen Mischungen (statistische Copolymere oder auch Blockcopolymere), die durch Copolymerisation von wenigstens zwei substituierten oder unsubstituierten Acrylsäureestermonomeren entstanden sind (z. B. Methylmethacrylat-n-Butylmethacrylat-Copolymere), lassen sich im Rahmen der Erfindung auch Poly(meth)acrylatplatten aus Copolymeren verwenden, die bis zu 50 Gew.-% wenigstens eines weiteren vinylisch ungesättigten Monomeren aufweisen, welches mit wenigstens einem substituierten oder unsubstituierten Acrylsäureestermonomeren copolymerisierbar ist.

Beispiele hierfür sind u. a. Methylmethacrylat-StyrolCopolymere oder Methylmethacrylat-Butylacrylat-Styrol-Terpolymere.

Es handelt sich bei den Comonomeren um optionale Bestandteile oder Komponenten, die vorzugsweise in untergeordneter Menge in Form von sie aufweisenden Copolymeren im Acrylglas enthalten sind. Sie werden in der Regel so ausgewählt, daß sie keinen nachteiligen Effekt auf die Eigenschaften des erfindungsgemäß zu verwendenden Poly(meth)acrylats haben.

Das erwähnte oder die erwähnten Comonomeren kann bzw. können u. a. dazu eingesetzt werden, die Eigenschaften des Copolymeren auf erwünschte Weise zu modifizieren, beispielsweise durch Steigerungen oder Verbesserungen der Fließeigenschaften, wenn das Copolymer im Rahmen seiner Verarbeitung zu Halbzeug auf die Schmelztemperatur erhitzt wird, oder zur Reduzierung einer Restfarbe im Copolymer oder durch Verwendung eines polyfunktionellen Monomeren, um auf diese Art und Weise ein gewisses oder definiertes Maß an Vernetzung in das Copolymer einzuführen.

Zu für diesen Zweck geeigneten Monomeren gehören u. a. Vinylester, Vinylchlorid, Vinylidenchlorid, Styrol, α -Methylstyrol und die verschiedenen halogensubstituierten Styrole, Vinyl-und Isopropenylether, Diene, wie beispielsweise 1,3-Butadien und Divinylbenzol. Die Farbverminderung des Copolymeren kann beispielsweise besonders bevorzugt durch Einsatz eines elektronenreichen Monomeren, wie beispielsweise eines Vinylethers, Vinylacetat, Styrol oder α-Methylstryrol, erreicht werden.

Besonders bevorzugt unter den genannten Comonomer-Verbindungen sind aromatische Vinylmonomere, wie beispielsweise Styrol oder α-Methylstyrol.

Auch physikalische Mischungen, sogenannte Blends, sind für die Poly(meth)acrylatplatten (Halbzeuge) bevorzugt.

Des weiteren kann das erfindungsgemäße Halbzeuge oder die erfindungsgemäße Poly(meth)acrylatplatte übliche Additive aufweisen. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Thixotropiermittel, UV-Schutzmittel, Verwitterrungsschutzmittel und Weichmacher.

Füllstoffe sind generell Zusätze in fester Form, die sich hinsichtlich ihrer Zusammensetzung und Struktur wesentlich von der Poly(meth)acrylat-Matrix-unterscheiden. Es kann sich hierbei sowohl um anorganische als auch um organische Materialien handeln. Sie sind in der Fachwelt weithin bekannt.

Vorzugsweise werden unter den Bedingungen der Depolymerisation der Poly(meth)acrylate inerte Füllstoffe eingesetzt. Hierbei werden in Bezug auf die Erfindung unter Füllstoffen, die unter den Bedingungen der Depolymerisation der Poly(meth)acrylate inert sind, solche Substanzen verstanden, die die Depolymerisation von (Meth)acrylatpolymeren nicht wesentlich nachteilig beeinflussen oder gar unmöglich machen. Diese Eigenschaft der Füllstoffe ermöglicht ein einfaches Recycling der aus den Halbzeugen (Poly(meth)acrylatplatten herstellbaren Formkörpern, wie beispielsweise Duschwannen oder Waschbecken.

Poly(meth)acrylate, vor allem PMMA, zählen zu den wenigen Kunststoffen, die hervorragend für das direkte chemische Recycling geeignet sind. Hierunter ist zu verstehen, daß diese Polymere sich bei bestimmten Temperaturen und Drucken wieder vollständig in die entsprechenden Monomerbausteine zerlegen lassen (Depolymerisation), wenn auf geeignete Weise Wärme zugeführt wird. So werden beispielsweise zur Depolymerisation von Polymethylmethacrylat (PMMA) und Rückgewinnung des dabei anfallenden monomeren Methylmethacrylats (MMA) durch thermische Behandlung von Acrylglas-Abfällen bei Temperaturen > 200 °C, Kondensation der entstehenden Monomer-Brüden und Aufarbeitung der rohen Monomeren in der Literatur und in den Patentschriften verschiedene kontinuierliche und diskontinuierliche Verfahrensweisen beschrieben. Bei dem industriell am häufigsten angewandten Verfahren wird das Polymermaterial in einen teilweise mit Blei gefüllten Kessel gegeben, der von außen beheizt wird. Bei Temperaturen von über 400 °C depolymerisiert das Polymermaterial und die entstehenden Monomerdämpfe gelangen über eine Rohrleitung in einen Kondensator, wo sie zu einem rohen, flüssigen Monomer kondensiert werden. Entsprechende Depolymerisationsverfahren sind beispielsweise aus der DE-OS 21 32 716 bekannt.

Die erfindungsgemäßen Halbzeuge sind beispielsweise durch Polymerisation eines (Meth)acrylat-Systoems in einem Gießverfahren, vorzugsweise nach dem Kammerverfahren, Rosteroprozess oder anderen Abarten und Modifikationen des Kammerverfahrens, erhältlich, wobei das polymerisierbare System die hierin vorstehend angegebenen Komponenten A) bis F) umfaßt.

Die Komponente A) ist essentieller Bestandteil des zu polymerisierenden (Meth)acrylat-Systems.

Ein in Klammern gesetzter Bestandteil steht für dessen optionale Verwendbarkeit, d. h. (Meth)acrylat steht für Acrylat und/oder Methacrylat.

Die Monomerkomponente A) enthält zumindest 50 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigem Esterrest sind auf 50 Gew.-% in der Komponente A) beschränkt. Bevorzugt Enthält die Komponente A) zumindest 40 Gewichtsprozent Methylmethacrylat.

Die langkettigen (Meth)acrylate machen in der angegebenen Menge das System schlagzäher. Damit machen diese Ester das Halbzeug zwar flexibler, aber auch weicher, wodurch die Gebrauchseigenschaften bei Mengen über 50 Gew.-% eingeschränkt würden.

Neben den (Meth)acrylaten kann die Komponente A) auch andere Comonomere enthalten, wobei deren Anteil auf 50 Gew.-% beschränkt ist. Unter diesen Comonomeren können Vinylaromaten und/oder Vinylester zu jeweils bis zu 50 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu. 80 - 100 Gew.-% und besonders bevorzugt zu 90 - 100 Gew.-% aus (Meth)acrylaten aufgebaut, da sich mit diesen Monomeren Halbzeuge mit für Sanitärartikel günstigen Verarbeitungs- und Gebrauchseigenschaften erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.-% und besonders vorteilhaft zu max. 20 Gew.-% in der Komponente A) enthalten. Hierdurch lassen sich besonders flexible Schichten aufbauen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat.

Als Comonomere eignen sich insbesondere Vinyltoluol, Styrol, Vinylester.

Vorzugsweise ist Styrol auf max. 20 Gew.-% in A) beschränkt, da ein höherer Gehalt zu Störungen bei der Polymerisation führen kann.

Essentiell sind in der Komponente A) auch mehrwertige (Meth)acrylate enthalten. Die mehrwertigen (Meth)acrylate tragen durch ihre vernetzende Wirkung bei der Polymerisation unter anderem zur Verminderung der Wasseraufnahme des Halbzeugs und damit des letztlich resultierenden Sanitärartikels bei. Vorzugsweise sind mehrwertige (Meth)acrylate im (Meth)acrylatsystem in der Komponente A) in einer Menge von 0,1 - 30 Gew.-%, besonders zweckmäßig in einer Menge von 0,2 - 5 Gew.-%, enthalten. Die polyfunktionellen (mehrwertigen) (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflußt werden.

Zu vorzugsweise einsetzbaren mehrfachfunktionellen (Meth)acrylaten gehören unter anderem:
(1) Difunktionelle (Meth)acrylate
   Verbindungen der allgemeinen Formel: 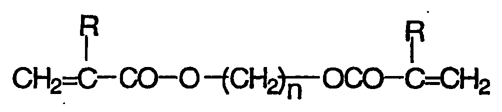 worin R Wasserstoff oder Methyl ist und n eine positive ganze Zahl zwischen 3 und 20, wie z. B. Di(meth)acrylat des Propandiols, Butandiols, Hexalzdiols, Octandiols, Nonandiols, Decandiols und Eicosandiols, Verbindungen der allgemeinen Formel: 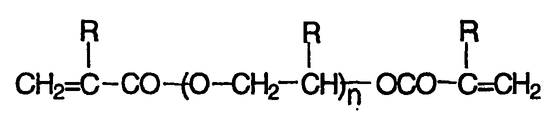 worin R Wasserstoff oder Methyl ist und n eine positive ganze Zahl zwischen 1 und 14, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylenglycols und Tetradecapropylenglycols; und Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.
(2) Tri- oder mehrfachfunktionelle (Meth)acrylate
   Trimethylolpropantri(meth)acrylate und
   Pentaerythritoltetra(meth)acrylat.

Bevorzugte übliche polyfunktionelle (Meth)acrylate umfaßen neben anderen Triethylenglykoldimethacrylat (TEDMA), Trimethylolpropantrimethacrylat (TRIM), 1,4-Butandioldimethacrylat (1,4-BDMA), Ethylenglykoldimethacrylat (EDMA).

Weitere bevorzugte Komponenten eines erfindungsgemäß einzusetzenden (Meth)acrylatsystems sind mehrwertige (mindestens zweifachfunktionelle) Urethan(meth)acrylate.

Diese sind beispielsweise auf herkömmliche weitläufig bekannte Weise erhältlich aus isocyanatfunktionellen Vorpolymeren, in welche mittels hydroxyfunktionellen Verbindungen, wie z. B. Hydroxyethylacrylat, Hydroxyethylmethacrylat, Alkylalkohol; Vinylalkohol usw., olefinische Doppelbindungen eingeführt werden. Neben an sich bekannten Urethan(meth)acrylaten spielen für die Erfindung neuartige Urethan(meth)acrylate eine besondere Rolle.

Ganz besonders zweckmäßige Schichten werden bei Einsatz von bestimmten neuartigen Urethan(meth)acrylaten erhalten. Diese weisen mindestens drei reaktive endständige ethylenisch ungesättigten Funktionalitäten auf, die von (Meth)acrylaten abgeleitet sind.

Sie sind durch die Umsetzung von Hydroxyalkyl (meth)-acrylsäureestern mit Polyisocyanaten und Polyoxyalkylenen, die mindestens drei Hydoxyfunktionalitäten aufweisen, wobei der Anteil an Polyethylenoxid kleiner als 50 Gew.-% ist, bezogen auf die Gesamtmenge an Polyoxyalkylen, erhältlich.

Erfindungsgemäß einsetzbare Hydroxyalkyl(meth)-acrylsäureester sind Ester der (Meth)acrylsäure mit zweiwertigen, aliphatischen Alkoholen. Diese Verbindungen sind in der Fachwelt weithin bekannt. Sie können beispielsweise durch die Reaktion von (Meth)acrylsäure mit Oxiranen erhalten werden.

Zu den Oxiranverbindungen gehören unter anderem Ethylenoxid, Propylenoxid, 1,2-Butylenoxid und/oder 2,3-Butylenoxid, Cyclohexenoxid, Styroloxid, Epichlorhydrin und Glycidylester. Diese Verbindungen können sowohl einzeln als auch als Mischung verwendet werden. Die Umsetzung zu den Hydroxyalkyl(meth)acrylsäureestern ist beispielsweise in DE-A-24 39 352, DE-15 68 838 und GB 1 308 250 beschrieben.

Die so erhältlichen Hydroxyalkyl(meth)acrylsäureester sind häufig kommerziell erhältlich und daher für die erfindungsgemäßen Zwecke besonders geeignet.

Die Hydroxyalkyl(meth)acrylsäureester können auch Substituenten, wie beispielsweise Phenylreste oder Aminogruppen, enthalten. Des weiteren kann der Hydroxyalkylrest des Esters auch Polyoxyalkylengruppen enthalten, die sowohl linear als auch verzweigt sein können, wie beispielsweise Polyethylenoxid, Polypropylenoxid und Polytetramethylenoxid. Diese Gruppen weisen häufig zwischen 2 und 10 Oxyalkyen-Einheiten auf.

Bevorzugte Hydroxyalkyl(meth)acrylsäureester sind unter anderem Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexyiacrylat und 6-Hydroxyhexylmethacrylat, 3-Phenoxy-2-hydroxypropylmethacrylat, Polyethoxymethacrylat, Polypropoxymethacrylat, Polyethylenoxid/Polytetramethylenoxidmethacrylat, Polyethylenoxid/Polypropylenoxidmethacrylat, Acrylsäure-(4-hydroxybutylester), Acrylsäure-(2-hydroxyethylester), Methacrylsäure-(hydroxymethylamid), Caprolactonhydroxyethylmethacrylat und Caprolactonhydroxyethylacrylat, hiervon sind Hydroxyethylmethacrylat, Hydroxyethylacrylat, 2-Hydroxypropylmethacrylat und 2-Hydroxypropylacrylat ganz besonders bevorzugt.

Polyisocyanate bezeichnen im Rahmen der vorliegenden Erfindung niedermolekulare Verb., die im Molekül zwei oder mehrere Isocyanat-Gruppen enthalten.

Durch Wahl des Anteils an Polyisocyanaten mit 3 oder mehr Isocyanat-Gruppen läßt sich das Eigenschaftsspektrum von Reißdehnung und Reißfestigkeit gezielt beeinflußen. Je höher der Anteil an Verbindungen mit drei oder mehr Funktionalitäten ist, desto größer wird die Reißfestigkeit. Hierbei nimmt allerdings die Reißdehnung stark ab. Dementsprechend wurde festgestellt, daß der Anteil dieser Polyisocyanate mit drei oder mehr Funktionalitäten nicht größer als 10 Gew.-%, bevorzugt nicht mehr als 5 Gew.-%, bezogen auf die Gesamtmasse an Polyisocyanaten, sein sollte. Diese Ausführungen beziehen sich allerdings nur auf die Herstellung der besonders günsti einsetzbaren Urethan(meth)acrylate gemäß Ausführungsform A), wie sie weiter oben beschrieben ist. Bei der Ausführungsform B), in der Polyoxyalkylene, die zwei Hydroxygruppen aufweisen, über Polyisocyanate verknüpft werden, die drei oder mehr Isocyanatgruppen aufweisen, ist der Anteil der Polyisocyanate mit drei oder mehr Funktionalitäten entsprechend größer.

Zu den in der vorliegenden Erfindung verwendbaren Polyisocyanaten gehören unter anderem 2,4-Toluendiisocyanat, 2,6-Toluendiisocyanat, 4,41-Diphenylmethandiisocyanat (MDI), 4,4'-Dicyclohexyldiisocyanat, meta- und para-Tetramethylxylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat, Triphenylmethan-4,4',4"-triisocyanat, Tris-(4-isocyanatophenyl)-thiophosphat, und Mischungen davon.

Geeignete Polyisocyanate können beispielsweise auch durch die Umsetzung von mehrwertigen Alkoholen mit Diisocyanaten oder durch die Polymerisation von Diisocyanaten erhalten werden. Des weiteren sind auch Polyisocyanate einsetzbar, die durch Umsetzung von Hexamethylendiisocyanat mit geringen Mengen an Wasser darstellbar sind. Diese Produkte enthalten Biuret-Gruppen.

Diese Verbindungen sind in der Fachwelt weithin bekannt und zum größten Teil kommerziell erhältlich. Hierzu gehören unter anderem ®Desmodur H; ®Desmodur N 100, ®Desmodur N 3300 (von BAYER), ®Basonat PLR 8401, ®Basonat PLR 8638 (von BASF), ®Tolonate HDB 75 MX, ®Tolonate HDT 90 (von Rhône Poulenc), ®Vestanat IPD, ®Vestanat T 1890/100 und ®Vestanat T 2960 (von Hüls).

Bevorzugt sind Verbindungen, deren Isocyanatgruppen unterschiedliche Reaktivitäten aufweisen. Diese Eigenschaft erleichtert die Reaktionsführung, ohne daß hierdurch eine Beschränkung erfolgen soll. Ein Beispiel für ein solch bevorzugtes Polyisocyanat ist Isophorondiisocyanat.

Als Polyisocyanate eigen sich im Rahmen der vorliegenden Erfindung auch die analogen Isothiocyanate. Da diese allerdings schlechter kommerziell erhältlich sind, sind diese Verbindungen weniger bevorzugt.

Polyoxyalkylene, die mindestens drei Hydroxy-funktionalitäten aufweisen, können beispielsweise durch Polyaddition von cyclischen Ethern, wie beispielsweise Oxiranen sowie Tetrahydrofuran, erhalten werden.

Zu den Oxiranen, die zur Polyaddition verwendet werden können, gehören unter anderem die zuvor genannten. Von diesen ist Propylenoxid bevorzugt.

Um mindestens drei Hydroxyfunktionalitäten zu erhalten, die mit Isocyanatgruppen reagieren können, können beispielsweise Alkohole als Startmoleküle eingesetzt werden, die mindestens drei Hydroxygruppen aufweisen.

Hierzu gehören unter anderem Glycerin, Trimethylolpropan, Erythrit, Pentaerythrit, Sorbit und Inosit, von diesen ist Glycerin bevorzugt.

Die Polyaddition von cyclischen Ethern an mehrwertige Alkohole ist in der Fachwelt weithin bekannt. Wertvolle Hinweise findet der Fachmann beispielsweise in Ullmann's Encyclopedia of Industrial Chemistry, 5. Aufl., Stichwort "Polyoxyalkylenes".

Des weiteren können Polyoxyalkylene, die drei oder mehr Hydroxyfunktionalitäten aufweisen, auch in situ hergestellt werden. Dies wird durch Variante B) erreicht, indem Polyoxyalkylene mit zwei Hydroxyfunktionalitäten durch Polyisocyanate mit drei oder mehr Isocyanatgruppen verknüpft werden.

Das Gewichtsmittel des Molekulargewichts der Polyoxyalkylene kann in weiten Bereichen variieren. Vorzugsweise liegt es im Bereich von 2 000 bis 20 000, bevorzugt im Bereich von 4 000 bis 10 000 und ganz besonders bevorzugt im Bereich von 4 000 bis 8 0000 g/mol.

Wesentlich ist aber, daß die Polyetherketten eine Mindest-Flexibilität induzieren. Dementsprechend sollte die Kettenlänge der Polyetherketten im Zahlenmittel größer, als 10 Einheiten, bevorzugt größer als 20 Einheiten und ganz bevorzugt größer als 30 Einheiten sein.

Die oben genannten cyclischen Ether können auch als Mischung eingesetzt werden, wodurch Copolymere entstehen. Es können auch Blockcopolymere diesen Typs eingesetzt werden.

Einige Polyoxyalkylene mit mindestens drei Hydroxyfunktionalitäten sind kommerziell erhältlich.

Bevorzugte Polyoxyalkylene sind Polyoxypropylene. Bevorzugt können auch Polytetramethylenoxide sein, die zusammen mit den Polyoxypropylenen eingesetzt werden können, wobei diese Polyoxyalkylene jeweils mindestens drei reaktive, endständige Hydroxyfunktional'itäten aufweisen.

Es wird angenommen, daß zumindest ein Teil der besonders zweckmäßigen neuartigen Urethan(meth)acrylate durch die folgende Formel (A.IV) beschreibbar sind: 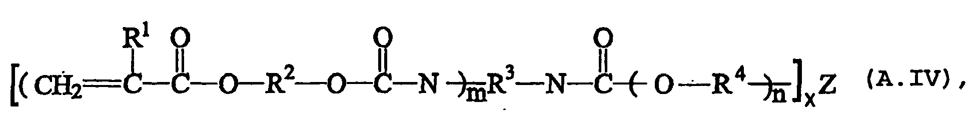 worin
- R¹: Wasserstoff oder Methyl ist,
- R²: eine lineare oder verzweigte Alkylengruppe mit 2 bis 20 Kohlenstoffatomen oder Alkylenoxide mit 4 bis 50 Kohlenstoffatomen ist,
- R³: eine bis 18 Kohlenstoffatome enthaltende aromatische, aliphatische oder cycloaliphatische Gruppe darstellt, die sich von Diisocyanaten oder Diisocyanatgemischen ableiten,
- R⁴: einen Alkylenrest mit mindestens 2 Kohlenstoffatomen unter der Voraussetzung darstellt, daß mindestens die Hälfte aller Reste R⁴ des Urethan(meth)acrylats der Formel (I) 3 oder mehr Kohlenstoffatome aufweisen,
- m: eine ganze Zahl ≥ 1,
- n: eine ganze Zahl ≥ 10,
- x: eine ganze Zahl ≥ 3 und
- Z: eine von Alkoholen mit mindestens drei Hydroxygruppen oder von Polyisocyanaten mit mindestens drei Isocyanatgruppen abgeleitete Verbindungsgruppe ist.

Der Begriff "Alkylen" bedeutet ein divalenter Rest, der durch das Entfernen von zwei Wasserstoffatomen jeweils von einem nicht-benachbarten Kohlenstoffatom eines ursprünglichen Kohlenwasserstoffs erhalten wird und umfaßt Alkylene von 3 bis 18 Kohlenstoffatomen, einschließlich beispielsweise 1,3-Propylen, 1,4-Butylen, 1,5-Pentylen, 1,8-Octylen und 1,10-Decylen. Diese Reste können sowohl verzweigt als auch linear sein. Des weiteren können diese Gruppen auch substituiert sein.

Die Gruppen R² bis R⁴ sowie die Zahlen m und n leiten sich von den bei der Umsetzung eingesetzten Ausgangsstoffe ab. Diese sind weiter oben beschrieben. Dementsprechend ist m vorzugsweise gleich 1, zur Erhöhung der Reißfestigkeit können jedoch auch Polyisocyanate mit drei oder mehr Funktionalitäten eingesetzt werden, so daß folglich ein Teil der Moleküle durch Formeln darstellbar ist, in denen m > 1 ist.

Die Verbindungsgruppe Z sowie die Zahl x sind ebenfalls von den Ausgangsstoffen abhängig. Darüber hinaus können der Rest Z und der Parameter x auch durch die Reaktionsführung und die Mengenverhältnisse der Ausgangsstoffe beeinflußt werden. Wird beispielsweise Glycerin als Z gewählt, so können hieraus unter anderem auch Verbindungsgruppen der Formel (A.V) 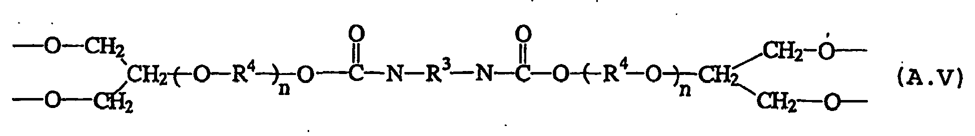 gebildet werden, die durch Kopplung von zwei Polyoxyalkylenen mit Polyisocyanaten entstehen können, wobei R³, R⁴ und n die zuvor genannte Bedeutung haben. Es ist allerdings auch die Bildung von Makromolekülen denkbar, die durch die Kopplung von mehr als zwei Polyoxyalkylenen entstehen.

Besonders bevorzugte Urethan(meth) acrylate für die vorliegende Erfindung weisen drei oder vier reaktive endständige ethylenisch ungesättigte Funktionalitäten auf.

Die für die Erfindung bevorzugten Urethan(meth)acrylate lassen sich durch Verfahren herstellen, bei denen man
i) mindestens ein Hydroxyalkyl(meth)acrylsäureester
   mit
ii) mindestens einem Polyisocyanat
   und
iii) mindestens einem Polyoxyalkylen
umsetzt.

Hierbei sind verschiedene Reaktionen denkbar. So können Urethan(meth)acrylate für die vorliegende Erfindung in einer zweistufigen Synthese hergestellt werden. Hierbei werden beispielsweise äquimolare Mengen Hydroxyalkyl(meth)-acrylsäureester und Polyisocyanat umsetzt, wonach man das so erhaltene Reaktionsprodukt mit einem geeigneten Menge Polyoxyalkylen reagieren läßt. Bei Wahl geeigneter Polyisocyanate oder durch eine geeignete Reaktionsführung lassen sich so insbesondere Urethan(meth)acrylate mit,drei reaktiven endständigen ethylenisch ungesättigten Funktionalitäten erhalten.

Es ist des weiteren denkbar die Umsetzung in einem Schritt durchzuführen. Hierbei entsteht ein Gemisch aus Urethan(meth)acrylaten mit einer unterschiedlichen Anzahl an ethylenisch ungesättigten Funktionalitäten. Es hat sich gezeigt, daß bei Verwendung von trifunktionalen Polyoxyalkylenen häufig tetrafunktionale Urethan(meth)acrylate mit Verbindungsgruppen der Formel (A.V) entstehen, wie diese weiter oben beispielhaft dargestellt sind. Die so erhaltenen Gemische können als Zusatzstoff in den (Meth)acrylatharzen ohne weitere Aufreinigung eingesetzt werden.

Die Reaktion kann in Substanz, d.h. ohne Verwendung eines weiteren Lösungsmittels durchgeführt werden. Falls gewünscht kann auch ein inertes Lösungsmittel eingesetzt werden. Hierzu gehören unter anderem Benzol, Toluol und Methylisobutylketon (MIBK), Methylethylketon (MEK).

Die Umsetzung der Isocyanatgruppen mit den Hydroxygruppen ist in der Fachwelt weithin bekannt. So kann die Reaktionstemperatur über einen weiten Bereich variieren, aber häufig liegt die Temperatur im Bereich von 30 °C bis 120 °C, vorzugsweise im Bereich von 60 °C bis 90 °C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein geringer Sauerstoffanteil vorhanden ist, da dieser eine mögliche Polymerisation inhibiert.

Um die Umsetzung zu beschleunigen werden häufig. Katalysatoren, wie beispielsweise tertiäre Amine, zu diesen gehören unter anderem 1,4-Diazabicyclo[2.2.2]octan, N-Methylmorpholin, N,N-Diethylcyclohexylamin und N.N.N',N'-Tetramethyldiaminomethan, oder organische Zinnverbindungen, zu diesen gehören unter anderem Dibutylzinndilaurat und Zinndioctoat" eingesetzt. Diese Katalysatoren sowie die Mengen, in denen diese Verbindungen eingesetzt werden, sind in der Fachwelt weithin bekannt und beispielsweise in Ullmann's Encyclopedia of Industrial Chemistry, 5. Aufl., Stichwort "Polyurethanes" beschrieben.

Bei der Umsetzung können Inhibitoren zugesetzt werden, die eine radikalische Polymerisation der (Meth)acrylate während der Reaktion verhindern. Diese Inhibitoren sind in der Fachwelt weithin bekannt.

Die Komponente B) ist eine optionale Komponente, die jedoch sehr bevorzugt eingesetzt wird.

Grundsätzlich kann man bei der Bereitstellung von B) auf zwei voneinander verschiedene Weisen vorgehen. Zum einen kann man B) als polymere Substanz mit A) mischen. Zum anderen kann man A) vorpolymersieren, wobei man einen sogenannten Sirup erhält. Dieser Sirup weist dann bereits monomere Bestandteile aus der Gruppe A) und polymere Betsandteile aus der Gruppe B) in Mischung miteinander auf.

Zur Einstellung der Viskosität des Harzes und der gesamten Rheologie des Systems sowie der besseren Durchhärtung kann - wie ausgeführt - der Komponente A) ein Polymer oder Prepolymer B) zugegeben werden. Dieses (Pre)polymer soll in A) löslich oder quellbar sein. Auf einen Teil A) werden 0 bis 12 Teile des Prepolymers B) eingesetzt. Geeignet sind insbesondere Poly(meth)acrylate, wobei diese als festes Polymerisat in A) gelöst oder als sogenannte Sirupe, d. h. teilweise polymerisierte Mischungen entsprechender Monomere, eingesetzt werden können. Weiterhin sind Polyvinylchlorid, Polyvinylacetat, Polystyrol, Epoxydharze, Epoxy(meth)acrylate, ungesättigte Polyester, Polyurethane oder Mischungen hiervon geeignet. Diese Polymere bewirken z. B. spezielle Flexibilitätseigenschaften, Schrumpfregulierung, wirken als Stabilisator oder Verlaufsverbesserer.

Bevorzugt werden 2 bis 11 Teile B) auf 1 Teil A) eingesetzt. Besonders zweckmäßig sind 4 bis 10 Teile B) auf 1 Teil A). Ganz besonders bevorzugt nimmt man 6 bis 9 Teile eines (Pre)polymers und mischt sie mit einem Teil polymerisierbaren Monomeren A).Vorzugsweise wird das (Pre)polymer B) in A) gelöst.

In bevorzugter Ausführungsform ist das Gewichtsverhältnis der Komponenten B) und A) des Bindemittels im Bereich von 1 : 1 bis 12 : 1. In diesem Bereich lässt sich eine optimale Abstimmung der Eigenschaften erreichen.

Besonders zweckmäßig sind Gewichtsverhältnisse B) : A) im Bereich von 5 : 1 bis 12 : 1.

Die Komponente B) ((Pre)polymer) kann ein beliebiges Polymerisat sein. Besonders zweckmäßig handelt es sich um ein Suspensionspolymerisat, Emulsionspolymerisat und/oder Mahlgranulat aus Recyclingprozessen. Der mittlere Teilchendurchmesser der (Pre)polymere liegt dann üblicherweise bei < 0,8 mm.

Beim Prepolymer B) handelt es sich ganz vorteilhaft um eine durch Suspensionspolymerisation erhältliche PMMA-Lackperle. Diese kann einschichtige Halbzeuge mit insbesonders auch ausreichender Schlagzähigkeit resultierender Formkörper möglich machen.

Der mittlere Teilchendurchmesser der Lackperle beträgt dabei etwa 0,1 -0,8 mm. Bevorzugt sind 0,2 - 0,8 mm, insbesondere 0,4 - 0,8 mm.

Beim (Pre)polymer B) handelt es sich bevorzugt um ein Copolymer, wobei sich Härte und Flexibilität der Verstärkungsschichten durch Art und Menge des Comonomeren im (Pre)polymer B) beeinflussen lassen. Zu einsetzbaren Comonomeren, welche am Aufbau des jeweiligen (Pre)polymeren B) beteiligt sind, gehören u. a. Acrylate und Methacrylate, die von Methylmethacrylat (MMA) verschieden sind, Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol.

Bevorzugte Comonomere sind für Methylacrylat u. a., Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat, Hydroxypropylmethacrylat.

Die Komponente C) ist eine essentielle Komponente, die zur Härtung (Polymerisation) des polymerisierbaren Systems unerläßlich'ist.

Die Polymerisation kann radikalisch sowie ionisch erfolgen, wobei die radikalische Polymerisation bevorzugt ist. Sie kann thermisch, durch Strahlen und durch Initiatoren erfolgen, wobei vorzugsweise Initiatoren verwendet werden, die Radikale bilden. Die jeweiligen Bedingungen der Polymerisation hängen von den gewählten Monomeren und dem Initiatorsystem ab und sind in der Fachwelt weithin bekannt.

Zu den bevorzugten Initiatoren gehören unter anderem die in der Fachwelt weithin bekannten Azoinitiatoren, wie AIBN bzw. 1,1-Azobiscyclohexancarbonitril, sowie Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,'5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert. -Butylhydroperoxid, Dicumylperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Es kommen ebenfalls Redoxsysteme in Frage, wobei auch phlegmatisierte Systeme in organischen Lösungsmitteln oder in wäßrigen Lösungen oder in wässriger Suspension bekannt und einsetzbar sind. Ein solches System ist unter der Marke ®Cadox von der Firma Akzo erhältlich.

Auch Mischungen mehrerer Initiatoren mit abgestufter Halbwertszeit sind möglich. Auf diese Weise läßt sich die Polymerisationsreaktion besser beherrschen, örtliche Unregelmäßigkeiten lassen sich vermeiden und es wird ein gleichmässigeres Ergebnis erhalten. Auch kann man dadurch die Nachpolymerisationszeit (Tempern des Halbzeugs in Thermoschränken) verkürzen.

Die Menge der Komponente C) ist in weiten Grenzen variabel. Sie richtet sich nach der Zusammensetzung der Monomeren, der Art und Menge des (Pre)polymeren sowie der gewünschten Polymerisationstemperatur und dem angestrebten Molekulargewicht des herzustellenden Polymers. Richtwerte ergeben sich etwa für Molekulargewichte von 10.000 bis 200.000 (Gewichtsmittel des Molekulargewichts) zu 2x10⁻⁵ bis etwa 1x10⁻⁴ Mol Initator pro Mol polymerisierbaren Bestandteilen des Monomersystems. Je nach Molekulargewicht der eingesetzten Initiatorverbindung(en) kommen pro Gewichtsteil der Komponente A) etwa 1x10⁻³ bis 5x10⁻⁵ Gewichtsteile der Komponente C) in Frage

Bei der Komponenten D) handelt es sich um einen optionalen Bestandteil des polymersierbareb (Meth)acrylat-Systems, der allerdings bevorzugt im System enthalten ist. Beispiele sind Emulgatoren. Bevorzugt sind Lecithine. Die Menge der einzusetzenden Substanzen kann über weite Bereiche varriiert werden. Bevorzugt sind 0,01 bis 1 Gewichtsteil D) auf 1 Gewichtsteil A). Besonders zweckmäßig sind 0,1 bis 0,2 Gewichtsteil D) auf 1 Gewichtsteil A).

Die Komponente E) ist optional. Es handelt sich hierbei um die üblichen Zusatzstoffe, die an sich bekannt sind, wobei beispielhafte Additive zuvor aufgeführt wurden. Zu E) sind vor allem auch solche Füllstoffe zu zählen, die nicht unter F) fallen. Hierzu gehören also nicht verstärkend wirkende Füllstoffe wie Farbpigmente und dergleichen, die vor allem' bevorzugt von kleinerer Partikelgröße als die Füllstoffe der Komponente F) sind. Die mittlere Partikelgröße der gemäß E) eingesetzten Füllstoffe liegt vorzugsweise im Bereich von kleiner als 10 µm, zweckmäßig im Bereich von kleiner- als 5 µm, besonders bevorzugt kleiner als 1 µm und ganz besonders bevorzugt kleiner als 0,01 µm. Das Verhältnis der mittleren Partikelgrößen der Füllstoffe E) zu F) ist zweckmäßig im Bereich von 1 3 bis 1 : 1000, vorzugsweise im Bereich von 1 : 5 bis 1 : 100 und besonders bevorzugt im Bereich von 1 : 10 bis 1 : 50.

Die Komponente F) ist essentiell. Darüber hinaus wurde diese Komponente zuvor ausführlich beschrieben.

Aus der erfindungsgemäßen Halbzeugplatte können Formkörper durch an sich bekannte Umformverfahren erhalten werden. Hierzu gehören unter anderem Ziehen, Streckformen, Strecken, Ziehformen, Tiefziehen, Vakuumformen, Pultrusion. Hierbei sind Verfahren bevorzugt, bei denen die Platte über den elastoplastischen Zustand geformt wird. Besonders gut geeignet ist beispielsweise die Warmformtechnik, auch Tiefziehen, genannt.

Hierbei wird die Poly(meth)acrylätplatte am Formrand fest eingespannt, wonach man das Formteil aus dem erwärmten, freien Zuschnitt heraus durch Umformkräfte in eine gewünschte Form bringt. Als Umformkräfte kommen unter anderem Vakuum, Druckluft oder mechanische Kräfte, z.B. Vorstreckstempel oder Niederhalter, in Betracht, die einzeln oder in Kombination verwendet werden können. Beim Formprozeß nimmt die Wanddicke der Poly(meth)acrylatplatte ab.

Die Poly(meth)acrylatplatte wird hierbei vorzugsweise auf eine Temperatur im Bereich von 140 bis 210°C, besonders bevorzugt 170 bis 190°C erwärmt.

Dementsprechend weisen die Formvorrichtungen neben dem Formwerkzeug gewöhnlich auch ein Heizvorrichtung auf, welche die Platte beispielsweise durch Infrarotstrahlen, Luft oder durch Kontakt aufwärmt, wobei die Erwärmung durch Infrarot bevorzugt ist, da diese Methode die Platte gleichmäßig erhitzt aber auch eine gezielte und punktuelle Erwärmung nur bestimmter Bereiche der Platte zuläßt.

Anschließend wird die erwärmte Platte in das Formwerkzeug gezogen. Dies erfolgt mit Hilfe der oben genannten Umformkräfte, wobei in den allermeisten Ausführungsformen von Warmformvorrichtungen der Bereich zwischen Platte und Form durch Vakuum entlüftet wird.

Unterschieden wird des weiteren zwischen dem Positiv- und dem Negativ-Formverfahren. Bei dem Positiv-Verfahren wird die Innenseite des Formkörpers exakt abgebildet, da diese Kontakt mit dem Formwerkzeug hat.

Diese Formgebungstechnik ist an sich bekannt, wobei der Fachmann wertvolle Hinweise beispielsweise in Ullmann's Encyclopedia of Industrial Chemistry, Fifth Edition auf CD-ROM, Ausgabe 1998, Stichwort "Plastics Prozessing" oder in Kunststoff-Maschinen-Führer, Johannaber, 3. Ausgabe, Hanser-Verlag, 1992, Seiten 618 ff. findet.

### Beispiele

### 1. Herstellung eines beispielhaften Halbzeugs (Beispiel 1)

1.1. Formenbau
Zwei Sekuritglasplatten werden als Form verwendet. Zwischen den Formglasplatten wird eine Dichtschnur aus PVC gelegt. Die Glasplatten werden anschließend mit Hilfe von Klammern an drei Seiten fixiert. Die Breite der Kammer läßt sich durch verschiedene Dicken der Dichtungsschnur variieren. Im Beispielfall betrug die lichte Dicke der Kammer etwa 8 mm. Die vierte Seite wird nach erfolgter Befüllung verschlossen. Das so verschlossene Plattensystem wird waagrecht gelagert und in ein Wasserbad plaziert.
1.2. Poly(meth)acrylatsystem für die Befüllung der Form

| Nr. | Gewichtsteile | Substanz | Gruppe | Gewichts-% oder Teile (T.) |
|---|---|---|---|---|
| 2) | 36,69 | Methylmethacrylat | A) | 79,64 % A) |
| 7) | 0, 08 | Vernetzer ^{2*} | A) | 0,17 % A) |
| 6) | 0,30 | Dimeres α-Methylstyrol | A) | 0,65 % A) |
| 1) | 10,00 | Vorpolymerisat ^{3*} entspricht etwa 9,00 T. A) und 1,00 T. B) | A) B) | 19,54 % A) 0,02 T. B) auf 1 T. A) |
| 10) | 0, 025 | Azovaleronitril | C) | |
| 5) | 0,275 | Soja Lecithin ^{5*} | D) | |
| 4) | 2,5 | Farbpaste ^{6*} | E) | |
| 8) | 0,05 | ®Tinuvin 770 ^{7*} | E) | |
| 9) | 0,08 | ®Aerosol OT ^{4*} | E) | |
| 3) | 50,00 | BC-Micro ^{1*} | F) | 1 T. F) auf 1 T. E A)-E) |

| | | | | |
|---|---|---|---|---|
| 1* Special Extender BC-Micro der Firma Naintsch, A-8045 Graz-Andritz, Austria, ist eine Verwachsung von weißem Talk mit reinem Dolomit und besteht gemäß chemischer Analyse aus 12 % SiO₂, 22 % MgO, 24 % CaO und weist einen Glühverlust bei 1h und 1050 °C von 40 % auf. Der Dolomitgehalt(Leco) beträgt 85 %. Bei einer Siebanalyse nach DIN 66165 ist der Rückstand,2,0 % auf 20 µm. | | | | |
| 2* Vernetzer steht für Triethylenglykoldimethacrylat (TEDMA). | | | | |
| 3* Vorpolymerisat ist ein auf MMA beruhender Sirup, worin Methylmethacrylat in bekannter Weise bis zu einem Umsatz von etwa 10 % (90 Gewichts % Restmonomer) vörpolymerisert wurde. Die Viskosität des Vorpolymerisats betrug etwa 450 cp. | | | | |
| 4* ®Aerosol OT ist ein Dioczylnatriumsulfosuccinat der Firma Cyanamid und wird als Trennmittel/Entformungsmittel verwendet. | | | | |
| 5* Soja Lecithin ist ein Produkt der Firma Stern Lecithin und Soja GmbH und wird als Benetzungsmittel für die eingesetzten Füllstoffe verwendet. | | | | |
| 6* Farbpaste ist eine Bezeichnung für eine Mischung im wesentlichen aus Titandioxid, Buntpigmenten und Dioctylphtalat (DOP). Die Mischung wird zur Einfärbung erfindungsgemäßer Platten verwendet. | | | | |
| 7* ®Tinuvin 770 ist Lichtstabilisator der Firma Ciba - Spezialitätenchemie GmbH und gehört zur Gruppe der HALS Produkte. | | | | |

1.3. Befüllung und Polymerisation in der Kammer
Zehn Teile Vorpolymerisat und Zehn Teile Methylmethacrylat werden vorgelegt; anschließend werden die Zusatzstoffe 4) bis 9) in den angegebenen Mengen zudosiert. Nach zehnminütigem Rühren beginnt man mit der Eindispersion des Füllstoffes. Die Dispergierzeit beträgt etwa eine Stunde. Der Rührkessel wird beim Dispergiervorgang gekühlt. Nach der Dispergierung werden die restlichen Teile Methylmethacrylat zugemischt und homogenisiert. Anschließend wird der Inititaor 10) eingerührt und der Kessel 45 Minuten evakuiert. Der beschriebene Ansatz wird in die Form gegossen; die Form wird' horizontal in ein Wasserbad bei 62 °C gelagert, der Inhalt wird polymersiert. Bei der Hauptpolymerisation werden ca. 90 % Umsatz erreicht. Die Nachpolymerisation der Platten erfolgt in einem Temeperofen bei 120 °C. Nach Abkühlen der Platten wird die obere Glasplatte'der Kammer entfernt und das Halbzeug (Poly(meth)acrylat-Plätte) entnommen.
1.4. Hochleistungsverformung der Halbzeug-Platte gemäß 1.3.
Das Halbzeug aus 1.3. hat eine Dicke von etwa 8 mm. Ein etwa 1,5 x 1,5 m großes Halbzeug wird zu einer Duschtasse tiefgezogen. Dies geschieht folgendermaßen: Die zu verformende Platte wird in einem Metallrahmen fixiert. An der Ober- und Unterseite wird die Platte mit Infrarotstrahlern erwärmt, bis eine Oberflächentemperatur von ca. 190 °C erreicht ist. Anschließend werden die Infrarotstrahler entfernt und eine Form wird an die Unterseite der Platte herangeführt, so daß diese luftdicht mit der Platte abschließt. Mit Vakuum wird die erwärmte Platte in die Form gezogen. Nach dem Abkühlen kann der verformte Körper entnommen werden.

### 2 bis 5

Gemäß Beispiel 1 wurden weitere Platten gefertigt. Insbesondere wurde in den Beispielen 2 bis 5 die Rezeptur des Poly(meth)acrylatsystems variiert. Die eingesetzten Systeme wiesen folgende Zusammensetzung auf:

Zusammensetzung der (Meth)acrylatsysteane 2 bis 5 für die Beispiele 2 bis 4 und das Vergleichsbeispiel 5, jeweils in Gewichtsteilen:

| Substanz | Bsp. 2 | Bsp. 3 | Bsp. 4 | Vgl.-Bsp. 5 |
|---|---|---|---|---|
| Methylmethacrylat | 30 | 40 | 50 | 3 |
| TEDMA ^{8*} | 0, 08 | 0,08 | 0,08 | 0, 025 |
| Dimeres α-Methylstyrol | 0,3 | 0,3 | 0,3 | 0,3 |
| Vorpolymerisat | 20 | 10 | 0 | 44 |
| Azovaleronitril | 0,025 | 0,025 | 0,025 | 0,025 |
| Lecithin-Soja ^{9*} | 0,3 | 0,3 | 0,3 | 0,3 |
| Pigment ^{10*} | 2,5 | 2,5 | 0 | 0 |
| ®Tinuvin 770 | 0,05 | 0,05 | 0,05 | 0,05 |
| Aerosol OT ^{4*} | 0,05 | 0,04 | 0,04 | 0,15 |
| BC-Micro | 46,42 | 46,705 | 0 | 49,150 |
| Plastorit Super ^{11*} | 0 | 0 | 49,205 | 0 |
| MAS ^{12*} | | | | 3 |

| | | | | |
|---|---|---|---|---|
| 8* TEDMA steht für die vernetzend wirkende Verbindung Triethylenglykoldimethacrylat. | | | | |
| 9* Lecithin steht für Soja Lecithin. | | | | |
| 10* Pigment bedeutet Farbpaste. | | | | |
| 11* Plastorit Super ist ein 3-Komponenten Mineral der Firma Naintsch, Austria. Es handelt sich um eine plättchenförmige Verwachsung der Mineralien Glimmer, Chlorit und Quarz mit den chemisch, physikalischen Daten: SiO2 : 58,0 %, Al203 : 20,0 %, MgO : 12,0 %, FeO : 3,0 % und K20 : 2,0 %. Bei der Siebanalyse gemäß DIN 66165 beträgt der Rückstand auf 12 µm 2 %. Die Kornverteilung weist einen 50 % Wert bei etwa 3 bis 4 µm auf, der 90 % Wert liegt bei etwa 8 bis 9 µm. | | | | |
| 12* MAS ist Methacrylsäure | | | | |

Aus den Halbzeugen der Beispiele 2 bis 4 und des Vergleichsbeispiels 5 wurden-Duschtassen gemäß 1.4 hergestellt.

Die Duschtasse gemäß Vergleichsbeispiel 5 wies keine hochglänzende Oberfläche auf. Der Konzentrationsgradient bei den Beispielen 2 bis 4 wurde mittels EDX bestimmt. EDX steht für energiedispersive Röntgenmicroanalyse. Hierbei wird die Magnesium-, Aluminium- und Siliziumkonzentration in verschiedenen Tiefen (Dicke d) der Halbzeug-Platten gemessen. Die Bestimmung des Konzentrationsgradienten in den beispielhaften Platten ergab, daß sich an der Oberfläche O eine Klarschicht von etwa 300 bis 400 µm ausbildete (bei 8 mm starken Halbzeugen). Die Konzentration an Füllstoffen steigt dann allmählich bis zu einer Tiefe von d = 1 bis 2 mm an, um sich dann bei 1 bis 2 mm einer Sättigung anzunähern.

Die Duschtassen gemäß Beispielen 1 bis 4 erfüllten die Anforderungen der einschlägigen Normen. Insbesondere wurden folgende Untersuchungen beispielhaft an der Duschtasse gemäß Beispiel 3 durchgeführt und bestanden:
1) Chemikalienbeständigkeit nach EN 249;
2) Beständigkeit gegen Temperaturwechsel gemäß EN 249;
3) Beständigkeit gegen Stoßbeanspruchung gemäß EN 249;
4) Durchbiegung gemäß EN 249 (verlangt: 2 mm) vorhanden 2 bis 4 mm.

## Patentansprüche

1. Selbstverstärkendes, thermoplastisch verformbares Halbzeug, insbesondere für die Herstellung von Sanitärartikeln, bevorzugt im. Tiefziehverfahren, bestehend aus einer einschichtigen Platte aus gefülltem Poly(meth)acrylat, wobei das Platten-Halbzeug einen auf sein Gesamtgewicht bezogenen mittleren Füllstoffgehalt Fₘ in Gewichtsprozent, eine Oberseite O und eine Unterseite U aufweist, **dadurch gekennzeichnet, daß** das Platten-Halbzeug an der Oberseite O an Füllstoffen abgereichert und an der Unterseite U an Füllstoffen angereichert ist, jeweils bezogen auf Fₘ.

2. Halbzeug gemäß Anspruch 1, **gekennzeichnet durch** eine Dicke d, die sich im Querschnitt gesehen, von O nach U erstreckt, so daß d bei O den Wert null und d bei U den Wert 1·d hat, wobei ein mittlerer Füllstoffgehalt Fₒ in Gewichtsprozent, bezogen auf den Abschnitt des Platten-Halbzeugs zwischen 0 und 0,1·d, kleiner als Fₘ ist, während ein mittlerer Füllstoffgehalt F_{U} in Gewichtsprozent, bezogen auf den Abschnitt des Platten-Halbzeugs zwischen 0,9•d und 1·d, größer als Fₘ ist.

3. Halbzeug gemäß Anspruch 1 oder 2, **dadurch gekennzeichnet, daß** der Füllstoffgehalt Fₘ im Bereich zwischen 20 und 80 Gewichtsprozent ist.

4. Halbzeug gemäß einem oder mehreren der vorhergehenden Ansprüche 1 bis 3, **gekennzeichnet durch** einen von O nach U verlaufenden diskontiniuerlichen Gradienten der Füllstoffkonzentration entsprechend einer unstetigen Änderung mit zunehmender Dicke der Platte.

5. Halbzeug gemäß einem oder mehreren der vorhergehenden Ansprüche, **dadurch gekennzeichnet, daß** die Konzentration der Füllstoffe an der Oberfläche 0 im Bereich zwischen 0 und 0,01•d, vorzugsweise zwischen 0 und 0,05•d, besonders bevorzugt zwischen 0 und 0,1•d gleich null ist.

6. Halbzeug gemäß einem oder mehreren der vorhergehenden Ansprüche, durch **gekennzeichnet**, daß der Füllstoff Talk, Dolomit, natürliche Verwachsungen von Talk und Dolomit, Glimmer, Quarz, Chlorit, Aluminiumoxid, Aluminiumhydroxid, Tone, Siliciumdioxid, Silikate, Carbonate, Phosphate, Sulfate, Sulfide, Metalloxide, Glasmehl, Glaskugeln, Keramik, Kaolin, Porzellan, Cristobalit, Feldspalt, Kreide, Kohlenstoff und/oder mit inertem Gas gefüllte hohle Mikropartikel umfaßt.

7. Halbzeug gemäß einem oder mehreren der vorhergehenden Ansprüche, **dadurch gekennzeichnet, daß** die eingesetzten Füllstoffpartikel eine plättchenartige oder nadelartige Form aufweisen.

8. Halbzeug gemäß einem oder mehreren der vorhergehenden Ansprüche, **dadurch gekennzeichnet, daß** die eingesetzten Füllstoffpartikel Schichtfüllstoffe sind.

9. Halbzeug gemäß einem oder mehreren der vorhergehenden Ansprüche, **dadurch gekennzeichnet, daß** die mittlere Partikelgröße des eingesetzten Füllstoffs im Bereich von 0,01 bis 80 µm, insbesondere im Bereich von 0,05 bis 30 µm, ganz besonders zweckmäßig im Bereich von 0,1 bis 20 µm, liegt.

10. Halbzeug gemäß einem oder mehreren der vorhergehenden Ansprüche 1 bis 8, **dadurch gekennzeichnet, daß** der Rückstand der eingesetzten Füllstoffe bei einer 20 µm Siebung weniger als zwei Gewichtsprozent ist.

11. Halbzeug gemäß einem oder mehreren der vorhergehenden Ansprüche, **dadurch gekennzeichnet, daß** die Dicke d im Bereich von 1 mm bis 12 mm, vorzugsweise 2 bis 10 mm, besonders bevorzugt 4 bis 8 mm ist.

12. Halbzeug gemäß einem oder mehreren der vorhergehenden Ansprüche, erhältlich durch Polymerisation eines (Meth)acrylat-Systems in einem Gießverfahren vorzugsweise nach dem Kammerverfahren oder einer Abart davon,
wobei das polymerisierbare System:
A)
| | | |
|---|---|---|
| a) (Meth)acrylat | 50 100 | Gew.-% |
| a1) Methyl(meth)acrylat | 0 - 99,99 | Gew.-% |
| a2) C₂-C₄ (Meth)acrylat | 0 - 99,99 | Gew.-% |
| a3) ≥ C₅ (Meth)acrylat | 0 - 50 | Gew.-% |
| a4) mehrwertige (Meth)acrylate | 0,01 - 50 | Gew.-% |
| b) Comonomere | 0 - 50 | Gew.-% |
| b1) Vinylaromaten | 0 - 50 | Gew.-% |
| b2) Vinylester | 0 - 50 | Gew.-%, |
wobei die Komponenten a) und b) so gewählt sind, daß sie zusammen 100 Gewichtsprozent der polymerisierbaren Komponente A) ergeben,
B) auf 1 Gew.-Teil A) 0 - 12 Gew.-Teile eines in A) löslichen oder quellbaren (Pre)polymers,
C) Initiator in einer Menge ausreichend zur Härtung der Komponente A),
D) gegebenenfalls Mittel zur Einstellung der Viskosität des Systems,
E) übliche Additive in einer Menge bis zu 3 Gew.-teile auf 1 Gewichtsteil A)
und
F) 0,25 bis 4 Gew.-Teile Füllstoffe auf 1 Gew.-Teil Bindemittel (Summe aus A) bis E))
enthält.

13. Halbzeug gemäß Anspruch 12, erhältlich durch Polymerisation eines (Meth)acrylat-Systems, welches vor der Polymerisation eine Viskosität im Bereich von 0,02 bis 0,1 Pa•s (20 bis 100 cP), vorzugsweise 0,03 bis 0,08 Pa•s (30 bis 80 cP), besonders bevorzugt 0,04 bis 0,06 Pa•s (40 bis 60 cP), ganz besonders zweckmäßig etwa 0,05 Pa•s (50 cP), aufweist.

14. Verfahren zur Herstellung eines plattenförmigen Halbzeugs gemäß einem oder mehreren der Ansprüche 1 bis 13, bei welchem man
a) eine polymerisierbare, gefüllte (Meth)acrylat-Zusammensetzung bereitstellt,
b) die bereitgestellte Zusammensetzung in eine vorbereitete Form gießt,
c) die Zusammensetzung in der Form bei einer Temperatur oberhalb Raumtemperatur unter Erhalt eines plattenartigen Halbzeugs polymerisiert und
d) das Halbzeug entformt,
**dadurch gekennzeichnet,**
**daß** man die Viskosität der polymerisierbaren, hochgefüllten (Meth)acrylat-Zusammensetzung vor der Polymerisation in der Form auf einen Wert im Bereich von 0,02 bis 0,1 Pa•s (20 bis 100 cP), vorzugsweise 0,03 bis 0,08 Pa•s (30 bis 80 cP), besonders bevorzugt 0,04 bis 0,06 Pa•s (40 bis 60 cP), ganz besonders zweckmäßig etwa 0,05 Pa•s (50 cP), einstellt.

15. Verfahren gemäß Anspruch 14,
**dadurch gekennzeichnet,**
**daß** man die Viskosität der Zusammensetzung durch Variation des Gewichtsverhältnisses von (Pre)polymer zu polymersierbaren Monomeren in der Zusammensetzung reguliert.

16. Verfahren gemäß Anspruch 13 oder 14,
**dadurch gekennzeichnet,**
**daß** man die Viskosität der Zusammensetzung durch Variation des Anteils an viskositätseinstellenden Mitteln reguliert.

17. Verfahren gemäß Anspruch 16,
**dadurch gekennzeichnet,**
**daß** man als als viskositätseinstellendes Mittel einen Emulgator, vorzugsweise ein oder mehrere Lecithine, einsetzt.

18. Formkörper aus einer Halbzeug-Platte gemäß einem oder mehreren der vorhergehenden Ansprüche 1 bis 13.

19. Formkörper nach Anspruch 18, **dadurch gekennzeichnet, daß** der Formkörper ein Sanitärartikel ist, hergestellt durch thermoplastisches Umformen einer Halbzeug-Platte.

20. Formkörper nach Anspruch 18, **dadurch gekennzeichnet, daß** der Formkörper eine Duschtasse ist, hergestellt durch Tiefziehen einer Halbzeug-Platte.

## Claims

1. Self-reinforcing, thermoplastically deformable semi-finished product, particularly for the production of sanitary articles, preferably by thermoforming, consisting of a single-layer sheet of filled poly(meth)acrylate, the semi-finished sheet having a mean filler content Fₘ, based on its total weight, in wt.%, an upper side O and a lower side U, **characterised in that** the semi-finished sheet is depleted of fillers on the upper side O and enriched with fillers on the underside U, in each case relative to Fₘ.

2. Semi-finished product according to claim 1, **characterised by** a thickness d which extends from O to U, viewed in cross section, so that d has a value 0 at O and d has the value 1.d at U, while a mean filler content Fₒ in wt.%, based on the section of the semi-finished sheet between 0 and 0.1.d, is less than Fₘ, while a mean filler content Fᵤ in wt.%, based on the section of the semi-finished sheet between 0.9.d and 1.d, is greater than Fₘ.

3. Semi-finished product according to claim 1 or 2, **characterised in that** the filler content Fₘ is in the range between 20 and 80 wt.%.

4. Semi-finished product according to one or more of the preceding claims 1 to 3, **characterised by** a discontinuous gradient of filler concentration extending from O to U, corresponding to an inconstant variation, as the thickness of the sheet increases.

5. Semi-finished product according to one or more of the preceding claims, **characterised in that** the concentration of fillers on the surface O is in the range between 0 and 0.01.d, preferably between 0 and 0.05.d, particularly preferably between 0 and 0.1.d is equal to 0.

6. Semi-finished product according to one or more of the preceding claims, **characterised in that** the filler comprises talc, dolomite, natural intergrowths of talc and dolomite, mica, quartz, chlorite, aluminium oxide, aluminium hydroxide, clays, silicon dioxide, silicates, carbonates, phosphates, sulphates, sulphides, metal oxides, powdered glass, glass beads, ceramics, kaolin, porcelain, cristobalite, feldspar, chalk, carbon and/or hollow microparticles filled with inert gas.

7. Semi-finished product according to one or more of the preceding claims, **characterised in that** the filler particles used are in the form of flakes or needles.

8. Semi-finished product according to one or more of the preceding claims, **characterised in that** the filler particles used are laminar fillers.

9. Semi-finished product according to one or more of the preceding claims, **characterised in that** the average particle size of the filler used is in the range from 0.01 to 80 µm, particularly in the range from 0.05 to 30 µm, most preferably in the range from 0.1 to 20 µm.

10. Semi-finished product according to one or more of the preceding claims 1 to 8, **characterised in that** the residue of the fillers used with a 20 µm screening is less than 20 wt.%.

11. Semi-finished product according to one or more of the preceding claims, **characterised in that** the thickness d is in the range from 1 mm to 12 mm, preferably 2 to 10 mm, most preferably 4 to 8 mm.

12. Semi-finished product according to one or more of the preceding claims, obtainable by polymerisation of a (meth)acrylate system in a casting process, preferably by the chamber method or a modification thereof,
wherein the polymerisable system contains:
A)
| | | |
|---|---|---|
| a) | (Meth)acrylate | 50-100 wt.% |
| a1) | Methyl(meth)acrylate | 0-99.99 wt.% |
| a2) | C₂-C₄ (Meth)acrylate | 0-99.99 wt.% |
| a3) | ≥C₅ (Meth)acrylate | 0-50 wt.% |
| a4) | Polyvalent (Meth)acrylates | 0.01-50 wt.% |
| b) | Comonomers | 0-50 wt.% |
| b1) | Vinyl aromatics | 0-50 wt.% |
| b2) | Vinyl esters | 0-50 wt.%, |
Components a) and b) being selected so that together they make up 100 wt.% of the polymerisable component A),
B) to 1 part by weight of A), 0-12 parts by weight of a (pre)polymer which is soluble or swellable in A),
C) Initiator in an amount sufficient to cure Component A),
D) optionally means for adjusting the viscosity of the system,
E) conventional additives in an amount of up to 3 parts by weight to 1 part by weight of A)
and
F) 0.25 to 4 parts by weight of fillers to 1 part by weight of binder (Total of A) to E)).

13. Semi-finished product according to claim 12, obtainable by polymerisation of a (meth)acrylate system which, before polymerisation, has a viscosity in the range from 0.02 to 0.1 Pa.s (20 to 100 cP), preferably 0.03 to 0.08 Pa.s (30 to 80 cP), particularly preferably 0.04 to 0.06 Pa.s (40 to 60 cP), most particularly preferably about 0.05 Pa.s (50 cP).

14. Process for preparing a semi-finished product in sheet form according to one or more of claims 1 to 13, wherein
a) a polymerisable, filled (meth)acrylate composition is prepared,
b) the prepared composition is poured into a prepared mould,
c) the composition is polymerised in the mould at a temperature above room temperature to obtain a semi-finished product in sheet form and
d) the semi-finished product is removed from the mould,
**characterised in that** the viscosity of the polymerisable highly filled (meth)acrylate composition before polymerisation in the mould is adjusted to a value in the range from 0.02 to 0.1 Pa.s. (20 to 100 cP), preferably 0.03 to 0.08 Pa.s (30 to 80 cP), particularly preferably 0.04 to 0.06 Pa.s (40 to 60 cP), most particularly preferably about 0.05 Pa.s (50 cP).

15. Process according to claim 14, **characterised in that** the viscosity of the composition is regulated by varying the weight ratio of (pre)polymer to polymerisable monomers in the composition.

16. Process according to claim 13 or 14, **characterised in that** the viscosity of the composition is regulated by varying the proportion of viscosity-adjusting agents.

17. Process according to claim 16, **characterised in that** an emulsifier, preferably one or more lecithins, is used as the viscosity-adjusting agent.

18. Shaped body produced from a semi-finished sheet according to one or more of the preceding claims 1 to 13.

19. Shaped body according to claim 18, **characterised in that** the shaped body is a sanitary article produced by thermoplastic moulding of a semi-finished sheet product.

20. Shaped body according to claim 18, **characterised in that** the shaped body is a shower tray, produced by thermoforming a semi-finished sheet product.

## Revendications

1. Produit semi-fini autorenforçateur, à déformation thermoplastique, destiné en particulier à la fabrication d'articles sanitaires, de préférence par procédé d'emboutissage profond, constitué d'une plaque monocouche en poly(méth)acrylate chargé, le produit fini en plaque présentant une teneur moyenne Fₘ en matières de charge en pourcentage en poids, rapportée à son poids total, une face supérieure O et une face inférieure U,
**caractérisé en ce que**
le produit fini en plaque est appauvri en matières de charge sur la face supérieure O et enrichi en matières de charge sur la face inférieure U, chaque fois par rapport à Fₘ.

2. Produit semi-fini selon la revendication 1,
**caractérisé par**
une épaisseur d qui, vue dans la section transversale, s'étend de O vers U, de sorte que d a la valeur zéro à O et la valeur 1•d à U, une teneur moyenne Fₒ en matières de charge en pourcentage en poids, rapportée au segment du produit fini en plaque situé entre 0 et 0,1•d, étant inférieure à Fₘ, tandis qu'une teneur moyenne Fᵤ en matières de charge en pourcentage en poids, rapportée au segment du produit fini en plaque situé entre 0,9•d et 1•d, est supérieure à Fₘ.

3. Produit semi-fini selon la revendication 1 ou 2,
**caractérisé en ce que**
la teneur Fₘ en matières de charge se situe dans la gamme de 20 à 80 pour cent en poids.

4. Produit semi-fini selon l'une ou plusieurs des revendications précédentes 1 à 3,
**caractérisé par**
un gradient de la concentration en matières de charge discontinu allant de O vers U, correspondant à une variation non constante avec épaisseur croissante de la plaque.

5. Produit semi-fini selon l'une ou plusieurs des revendications précédentes,
**caractérisé en ce que**
la concentration en matières de charge sur la surface O est égale à zéro dans la gamme de 0 à 0,01•d, de préférence de 0 à 0,05•d, de manière particulièrement préférée de 0 à 0,1•d.

6. Produit semi-fini selon l'une ou plusieurs des revendications précédentes,
**caractérisé en ce que**
la matière de charge comprend du talc, de la dolomite, des imbrications naturelles de talc et de dolomite, du mica, du quartz, de la chlorite, de l'oxyde d'aluminium, de l'hydroxyde d'aluminium, de l'argile, du dioxyde de silicium, des silicates, des carbonates, des phosphates, des sulfates, des sulfures, des oxydes métalliques, du verre pulvérisé, des billes de verre, de la céramique, du kaolin, de la porcelaine, de la cristobalite, du feldspath, de la craie, du carbone et/ou des microparticules creuses remplies de gaz inerte.

7. Produit semi-fini selon l'une ou plusieurs des revendications précédentes,
**caractérisé en ce que**
les particules de matière de charge utilisées possèdent une forme du type en plaquettes ou en aiguilles.

8. Produit semi-fini selon l'une ou plusieurs des revendications précédentes,
**caractérisé en ce que**
les particules de matière de charge utilisées sont des matières de charge en couche.

9. Produit semi-fini selon l'une ou plusieurs des revendications précédentes,
**caractérisé en ce que**
la granulométrie moyenne de la matière de charge utilisée se situe dans la gamme de 0,01 à 80 µm, en particulier dans la gamme de 0,05 à 30 µm, de manière particulièrement appropriée, dans la gamme de 0,1 à 20 µm.

10. Produit semi-fini selon l'une ou plusieurs des revendications précédentes 1 à 8,
**caractérisé en ce que**
le résidu des matières de charge utilisées est inférieur à deux pour cent en poids dans le cas d'un tamisage à 20 µm.

11. Produit semi-fini selon l'une ou plusieurs des revendications précédentes,
**caractérisé en ce que**
l'épaisseur d se situe dans la gamme de 1 à 12 mm, de préférence de 2 à 10 mm, de manière particulièrement préférée de 4 à 8 mm.

12. Produit semi-fini selon l'une ou plusieurs des revendications précédentes, obtenu par polymérisation d'un système (méth)acrylate par un procédé de moulage, de préférence par le procédé en chambres ou une variante de celui-ci,
dans lequel le système polymérisable contient :
A)
| | | |
|---|---|---|
| a) | (Méth)acrylate | 50 % - 100 % en poids |
| a1) | Méthyl(méth)acrylate | 0 % - 99,99 % en poids |
| a2) | (Méth)acrylate en C₂-C₄ | 0 % - 99,99 % en poids |
| a3) | (Méth)acrylate en ≥ C₅ | 0 % - 50 % en poids |
| a4) | (Méth)acrylate polyvalent | 0,01 % - 50 % en poids |
| b) | Comonomères | 0 % - 50 % en poids |
| b1) | Aromates vinyliques | 0 % - 50 % en poids |
| b2) | Esters vinyliques | 0 % - 50 % en poids |
les composants a) et b) étant choisis de façon à constituer ensemble 100 pour cent en poids du composant polymérisable A),
B) pour une part en poids de A), 0 à 12 parts en poids d'un (pré)polymère soluble ou gonflable dans A),
C) un initiateur en une quantité suffisante pour le durcissement du composant A),
D) le cas échéant, des agents pour ajuster la viscosité du système,
E) les additifs habituels en une quantité maximale de 3 parts en poids pour 1 part en poids de A)
et
F) 0,25 à 4 parts en poids de matières de charge pour 1 part en poids de liant (total de A) à E)).

13. Produit semi-fini selon la revendication 12, obtenu par polymérisation d'un système (méth)acrylate qui possède, avant la polymérisation, une viscosité située dans la gamme de 0,02 à 0,1 Pa•s (20 à 100 cP), de préférence de 0,03 à 0,08 Pa•s (30 à 80 cP), de manière particulièrement préférée de 0,04 à 0,06 Pa•s (40 à 60 cP), de manière particulièrement appropriée, d'environ 0,05 Pa•s (50 cP).

14. Procédé de fabrication d'un produit semi-fini en forme de plaque selon l'une ou plusieurs des revendications 1 à 13, selon lequel
a) on prépare une composition de (méth)acrylate chargée polymérisable,
b) on verse cette composition dans un moule préparé,
c) on polymérise cette composition dans le moule à une température supérieure à la température ambiante en obtenant un produit semi-fini en forme de plaque, et
d) on démoule le produit semi-fini,
**caractérisé en ce qu'**
on ajuste la viscosité de la composition de (méth)acrylate polymérisable fortement chargée, avant la polymérisation dans le moule, à une valeur située dans la gamme de 0,02 à 0,1 Pa•s (20 à 100 cP), de préférence de 0,03 à 0,08 Pa•s (30 à 80 cP), de manière particulièrement préférée de 0,04 à 0,06 Pa•s (40 à 60 cP), de manière particulièrement appropriée, à environ 0,05 Pa•s (50 cP).

15. Procédé selon la revendication 14,
**caractérisé en ce qu'**
on régule la viscosité de la composition par variation du rapport en poids du (pré)polymère aux monomères polymérisables dans la composition.

16. Procédé selon la revendication 13 ou 14,
**caractérisé en ce qu'**
on régule la viscosité de la composition par variation de la proportion d'agents ajustant la viscosité.

17. Procédé selon la revendication 16,
**caractérisé en ce que**
comme agent ajustant la viscosité on utilise un émulsifiant, de préférence ou une plusieurs lécithines.

18. Corps moulé à partir d'une plaque de produit semi-fini selon une ou plusieurs des revendications précédentes 1 à 13.

19. Corps moulé selon la revendication 18,
**caractérisé en ce que**
le corps moulé est un article sanitaire fabriqué par transformation thermoplastique d'une plaque de produit semi-fini.

20. Corps moulé selon la revendication 18,
**caractérisé en ce que**
le corps moulé est un bac de douche fabriqué par emboutissage profond d'une plaque de produit semi-fini.
